# EUROPÄISCHE PATENTSCHRIFT

(11) **EP 4 332 407 B1**
(45) Veröffentlichungstag und Bekanntmachung des Hinweises auf die Patenterteilung: **05.03.2025**
(21) Anmeldenummer: 23185287.2
(22) Anmeldetag: 13.07.2023
(51) Int. Cl.: F16D 65/12

(54) **BEARBEITUNGSMASCHINE UND VERFAHREN SOWIE FERTIGUNGSANLAGE ZUR HERSTELLUNG VON BESCHICHTETEN BREMSSCHEIBEN**
PROCESSING MACHINE AND METHOD AND PRODUCTION SYSTEM FOR PRODUCING COATED BRAKE DISKS
MACHINE D'USINAGE ET PROCÉDÉ AINSI QU'INSTALLATION DE FABRICATION POUR LA FABRICATION DE DISQUES DE FREIN REVÊTUS

(30) Priorität: 25.08.2022 DE 102022208788
(43) Veröffentlichungstag der Anmeldung: 06.03.2024
(73) Patentinhaber: Nagel Maschinen- und Werkzeugfabrik GmbH, 72622 Nürtingen (DE)
(72) Erfinder: Lintner, Johannes, 73072 Donzdorf (DE); Gazdik, Josef, 73033 Göppingen (DE); Ölke, Sven, 73110 Hattenhofen (DE); Heinz, Wilhelm, 72661 Grafenberg (DE)
(74) Vertreter: Patentanwälte Ruff, Wilhelm, Beier, Dauster & Partner mbB

(56) Entgegenhaltungen:
- DE-A1- 102020 007 581
- US-A1- 2020 255 231

## Beschreibung

Die Erfindung betrifft eine Bearbeitungsmaschine zur Verwendung bei der Herstellung einer beschichteten Bremsscheibe, ein Verfahren zur Herstellung einer beschichteten Bremsscheibe sowie eine Fertigungsanlage zur Herstellung einer beschichteten Bremsscheibe.

Eine Bremsscheibe ist der drehfest mit dem Rad verbundene Teil einer Scheibenbremse, auf den die an einem Bremssattel befestigten Bremsbeläge wirken, um eine Drehbewegung zu verzögern. Eine Bremsscheibe ist in der Regel punktsymmetrisch oder rotationssymmetrisch zu einer Achsmitte, durch die die Rotationsachse der Bremsscheibe führt. Eine Bremsscheibe weist die eigentliche Bremsfläche bzw. Reibfläche und einen inneren Nabenabschnitt mit der abgesetzten Achsbefestigung bzw. Nabe auf. Die Bremsfläche beschreibt einen Kreisring auf der Bremsscheibe.

Konventionelle Bremsscheiben für den Massenmarkt sind meist aus Grauguss gefertigt. Grauguss-Bremsscheiben stoßen u.a. hinsichtlich Korrosionsverhalten und Verschleißverhalten inzwischen an ihre Grenzen. Es gibt zwar auch Bremsscheiben aus Keramikwerkstoffen. Diese sind aber teuer und bisher nur für hochpreisige Fahrzeuge verfügbar.

Anstehende Verschärfungen der Vorschriften zu Feinpartikel-Emissionen von Kraftfahrzeugen lassen erwarten, dass zukünftige Bremsscheiben für Kraftfahrzeuge so ausgelegt sein müssen, dass beim Bremsen weniger Feinpartikel freigesetzt werden. Ein Ansatz hierfür ist die Beschichtung der Bremsscheiben bzw. deren als Reibflächen vorgesehenen Oberflächenabschnitte mit einer dünnen Funktionsschicht aus verschleißfesterem Material. Die Reibflächen von Bremsscheiben erstrecken sich typischerweise kreisringförmig um einen zentralen Nabenbereich um die Rotationsachse der Bremsscheibe. Dementsprechend sind die beschichteten Abschnitte zweckmäßig rotationssymmetrisch zur Rotationsachse ausgebildet.

Bei der Herstellung von beschichteten Bremsscheiben umfasst der Herstellungsprozess wenigstens eine Beschichtungsoperationen zur Beschichtung des metallischen Grundkörpers einer Bremsscheibe mit wenigstens einer Funktionsschicht, die in der Regel im Wesentlichen aus Metall besteht und z.B. eine verschleißmindernde und/oder eine korrosionshemmende Funktion haben kann. Eine Funktionsschicht kann eine oder mehrere Lagen unterschiedlicher Eigenschaften aufweisen. Meist folgen danach weitere Bearbeitungsoperationen, insbesondere Schleifoperationen, zur Aufbereitung der Oberfläche der Funktionsschicht in der Weise, dass sie als Reibfläche der Bremsscheibe dienen kann.

Die WO 2021/122951 A1 offenbart z.B. eine Vorrichtung zur Beschichtung von Bremsscheiben, insbesondere mittels Laserauftragsschweißen. Die Vorrichtung umfasst eine Basis mit einem Gehäuse, das einen Arbeitsraum bildet, einen Werkstückträger im Arbeitsraum, wobei der Werkstückträger zur Aufnahme eines Grundkörpers einer Bremsscheibe ausgebildet ist, einen Beschichtungskopf, der zur Erzeugung einer Beschichtung auf dem Grundkörper ausgebildet ist, eine Handhabungseinrichtung, die Relativbewegungen zwischen dem Werkstückträger und dem Beschichtungskopf erzeugt, und eine mehrstufig arbeitende Absaugeinrichtung zur Absaugung überschüssigen Materials aus dem Arbeitsraum. Beschrieben wird u.a. das Beschichten von Bremsscheiben unter Nutzung des Laserauftragsschweißens, insbesondere unter Nutzung von Hochleistungs-Laserauftragsschweißverfahren, wie z.B. des EHLA-Verfahrens. Das System soll für eine Fertigung in Großserie tauglich sein.

Das Kürzel "EHLA" steht für "Extreme High-Speed Laser Material Deposition". Dabei handelt es sich um eine Variante des Laserauftragsschweißens, bei dem das Schmelzen des Auftragspulvers nicht auf der Oberfläche des zu beschichtenden Körpers (Bremsscheibe) erfolgt, sondern bevor das Material die Oberfläche erreicht. Dadurch lassen sich mit relativer hoher Geschwindigkeit relativ dünne Schichten erzeugen. Dieses Verfahren wurde am Fraunhofer-Institut für Lasertechnik ILT und der Rheinisch-Westfälischen Technischen Hochschule Aachen (RWTH Aachen) entwickelt.

Die DE 10 2011 100 456 A1 offenbart ein entsprechendes Laserauftragsschweißverfahren, welches zum Aufbringen von Verschleißschutzschichten und/oder Korrosionsschutzschichten auf einen Grundkörper mit hoher Auftragsleistung ausgebildet ist. Das Verfahren nutzt pulverförmiges Material, das einem Bauteil zugeführt wird und mittels thermischer Energie, die durch einen Laser erzeugt und eingebracht wird, mit Abstand vor der zu beschichtenden Oberfläche geschmolzen und mit dem Bauteil verbunden wird.

Dokument EP 3 789 511 A1 offenbart eine Beschichtungsvorrichtung zum metallischen Beschichten von Werkstücken, insbesondere Bremsscheiben. Die Beschichtungsvorrichtung hat ein Gehäuse, welches einen Arbeitsraum umschließt und eine Halteeinrichtung zum Halten mindestens eines Werkstückes in dem Arbeitsraum. In dem Arbeitsraum sind mindestens zwei Auftragseinrichtungen angeordnet, welche zum gleichzeitigen Aufbringen und Aufschmelzen von Metallpulver ausgebildet sind. Bei einem Ausführungsbeispiel wird eine Bremsscheibe mit horizontaler Rotationsachse angeordnet und von beiden Seiten gleichzeitig beschichtet. Damit soll eine effiziente Fertigung ermöglicht werden.

Die DE 10 2020 007 581 A1 offenbart eine Vorrichtung zum Beschichten von Bremsscheiben umfassend wenigstens einen Schwenktisch mit angetriebenen Werkstückauflagen zur Aufnahme der zu beschichtenden Bremsscheibe, wenigstens eine induktive Heizeinrichtung zum Vorwärmen und/oder zur Erwärmung der Bremsscheibe, wenigstens eine Bearbeitungsoptik, wenigstens eine Pulverauftragsdüse, wobei wenigstens eine Sensorik zur Schichtdickenmessung vorgesehen ist, wobei die Bearbeitungsoptik, die Pulverauftragsdüse und die Sensorik zur Schichtdickenmessung zeitgleich angetrieben werden können.

### AUFGABE UND LÖSUNG

Vor diesem Hintergrund liegt der Erfindung die Aufgabe zugrunde, eine Bearbeitungsmaschine zur Verwendung bei der Herstellung einer beschichteten Bremsscheibe, ein Verfahren zur Herstellung einer beschichteten Bremsscheibe sowie eine Fertigungsanlage zur Herstellung einer beschichteten Bremsscheibe bereitzustellen, die die Herstellung von beschichteten Bremsscheiben bei moderaten Stückkosten im industriellen Maßstab ermöglichen.

Zur Lösung dieser Aufgabe stellt die Erfindung eine bei der Herstellung einer beschichteten Bremsscheibe verwendbare Bearbeitungsmaschine mit den Merkmalen von Anspruch 1 bereit. Weiterhin werden ein Verfahren zur Herstellung einer beschichteten Bremsscheibe mit den Merkmalen von Anspruch 10 sowie eine Fertigungsanlage mit den Merkmalen von Anspruch 14 bereitgestellt, die mindestens eine Bearbeitungsmaschine umfasst. Bevorzugte Weiterbildungen sind in den abhängigen Ansprüchen angegeben. Der Wortlaut sämtlicher Ansprüche wird durch Bezugnahme zum Inhalt der Beschreibung gemacht.

Eine beschichtete Bremsscheibe weist einen Grundkörper auf, der in Bezug auf eine Rotationsachse der Bremsscheibe eine rotationssymmetrische Massenverteilung aufweist und eine zentralen Nabenabschnitt sowie einen den Nabenabschnitt umschließenden kreisringförmigen Bremsabschnitt umfasst. Der Bremsabschnitt weist zwei axial gegenüberliegende Oberflächen auf, die jeweils eine bezogen auf die Rotationsachse rotationssymmetrische Beschichtung tragen, deren freie Oberfläche als Reibfläche der Bremsscheibe ausgebildet ist. Die gewünschte Makrostruktur und Mikrostruktur der freien Oberfläche der Beschichtung können z.B. durch Schleifen der zunächst ggf. noch rauen, ggf. rilligen und/oder welligen Oberfläche der Beschichtung erzeugt werden. Die Bremsscheibe (unbeschichtet oder beschichtet) wird in dieser Anmeldung auch kurz als "Werkstück" bezeichnet.

Zur Durchführung von Verfahrensschritten des Verfahrens wird eine Bearbeitungsmaschine bereitgestellt, die ein Transportsystem aufweist, das eine bewegliche Spindelträgereinheit aufweist, welche wenigstens eine Werkstückspindel trägt. Eine Werkstückspindel ist eine funktionale Einheit bzw. eine Baugruppe mit mehreren Komponenten unterschiedlicher Funktion. Die Werkstückspindel ist relativ zu der Spindelträgereinheit um eine Spindelrotationsachse drehbar gelagert. Sie weist eine Werkstückhaltevorrichtung auf, die derart ausgebildet ist, dass ein an der Werkstückhaltevorrichtung aufgenommenes Werkstück in Form einer Bremsscheibe bzw. eines Grundkörpers der Bremsscheibe bei Drehung der Werkstückspindel um die Spindelrotationsachse rotiert wird.

Zur Vorbereitung der Bearbeitung wird das Werkstück an der Werkstückhaltevorrichtung z.B. durch Einspannen befestigt. Bei den Bremsscheiben erfolgt die Befestigung so, dass die Rotationsachse der Bremsscheibe möglichst koaxial zur Spindelrotationsachse angeordnet ist. Die Befestigung des Werkstücks erfolgt vorzugsweise in einer Phase, in der sich die Werkstückspindel nicht um die Spindelrotationsachse dreht, sondern ruht.

Danach wird die Spindelträgereinheit des Transportsystems bewegt, um das an der Werkstückspindel aufgenommene Werkstück in eine Bearbeitungsposition einer Bearbeitungsstation zu transportieren. Der Ort des Beladens der Werkstückspindel mit dem Werkstück liegt somit entfernt von dem Ort, an welchem die Bearbeitung durchgeführt wird. Der maschineninterne Transfer wird durch das Transportsystem geleistet.

Eine Bearbeitungsmaschine zur Durchführung des Verfahrens weist dementsprechend mehrere, d.h. zwei oder mehr, entlang einer Transportstrecke angeordnete und durch die Werkstückspindel anfahrbare Arbeitsstationen auf, die eine Ladestation und wenigstens eine Bearbeitungsstation mit wenigstens einer Bearbeitungseinheit zum Bearbeiten wenigstens einer Seite des Werkstücks umfassen. In der Ladestation erfolgt die Befestigung des Werkstücks an der Werkstückhaltevorrichtung der Werkstückspindel, die danach zusammen mit dem daran gehaltenen Werkstück zu der Bearbeitungsstation bewegt wird.

Wenn sich das Werkstück in der Bearbeitungsposition der Bearbeitungsstation befindet, wird eine Bearbeitungsoperation durchgeführt, bei der an wenigstens einer Seite des Werkstücks ein zur Spindelrotationsachse und/oder zur Rotationsachse des Werkstücks rotationssymmetrischer Abschnitt bearbeitet wird. Dabei wird das Werkstück durch Drehung der Werkstückspindel mit einer Arbeitsdrehzahl um die Spindelrotationsachse gedreht. Die Bearbeitungseinheit bearbeitet dann das sich drehende Werkstück.

Der Begriff "Arbeitsdrehzahl" kann eine bestimmte Drehzahl beschreiben, die im Rahmen von Toleranzen während des Bearbeitungsprozesses konstant bleiben sollte. Der Begriff "Arbeitsdrehzahl" umfasst aber auch einen mehr oder weniger ausgedehnten Drehzahlbereich, der von einer minimalen bis zu einer maximalen Drehzahl reicht. Die Arbeitsdrehzahl kann sich während der Bearbeitung innerhalb dieses Bereiches verändern, ggf. nach einem durch die Steuerung vorgebbaren zeitlichen Drehzahlprofil. Beispielsweise kann die Arbeitsdrehzahl so variieren, dass eine Relativgeschwindigkeit zwischen einem lokal wirkenden Bearbeitungswerkzeug und der Oberfläche in allen radialen Positionen gleich bleibt.

Dabei ist es in Abhängigkeit von der verwendeten Bearbeitungstechnik bei vielen Ausführungsformen so, dass das sich drehende Werkstück und die Bearbeitungseinheit während der Werkstückrotation relativ zueinander bewegt werden, um eine flächige Bearbeitung zu erreichen. Diese Relativbewegung kann z.B. dadurch erzeugt werden, dass eine Bearbeitungseinheit bewegt wird, während die Werkstückspindel mit dem aufgenommenen Werkstück während der Bearbeitung nicht in eine andere Position bewegt wird. Es kann jedoch auch sein, dass die Bearbeitungseinheit während der Bearbeitung nicht bewegt wird, während sich die Werkstückspindel mit dem davon getragenen rotierenden Werkstück bewegt. Es ist auch eine Kombination mit bewegter Bearbeitungseinheit und gleichzeitig quer zur Spindelrotationsachse bewegter Werkstückspindel möglich. Wird eine Bearbeitungstechnik genutzt, die gleichzeitig über die gesamte radiale Ausdehnung des zu bearbeitenden Bereichs wirkt, so kann eine zusätzlich zur Werkstückrotation vorgesehen Relativbewegung auch entfallen.

Bei manchen Ausführungsformen umfasst die Bearbeitung die Erzeugung einer rotationssymmetrischen Funktionsbeschichtung bzw. einer Funktionsschicht auf wenigstens einer Oberfläche des Bremsabschnitts. Das Verfahren und die Bearbeitungsmaschine sind dazu dann so konfiguriert, dass sie dazu geeignet sind, auf wenigstens einer Oberfläche eines Werkstücks eine rotationssymmetrische Funktionsschicht zu erzeugen. Eine "rotationssymmetrische Funktionsschicht" ist dabei eine mehr oder weniger dünne Materialschicht mit bestimmter technischer Funktion, die auf die zu beschichtende Oberfläche so aufgebracht wird, dass das Beschichtungsmaterial im Wesentlichen rotationssymmetrisch zu einer Symmetrieachse der rotationssymmetrischen Funktionsschicht verteilt ist. Bei Bremsscheiben wird die Funktionsschicht in einem kreisringförmig um die Rotationsachse der Bremsscheibe liegenden Bereich aufgebracht, um die Reibfläche für die Bremsbeläge bereitzustellen. Bei einer fertig beschichteten Bremsscheibe weist die Funktionsschicht häufig mehrere Lagen unterschiedlicher Funktion auf, z.B. eine Haftschicht und eine darauf aufgebrachte Verschleißschicht. Es sind jedoch auch einlagige Funktionsschichten möglich.

Eine andere Form der Bearbeitung ist das Schleifen einer auf den Bremsabschnitt aufgebrachten Funktionsschicht, um deren zunächst meist zu raue Oberfläche zu glätten und ggf. vorhandene Welligkeiten und/oder Dickenvariationen zu reduzieren. Die Bearbeitungsmaschine kann somit auch als Schleifmaschine konfiguriert sein. Eine Bearbeitung kann auch darin bestehen, eine Oberfläche z.B. durch Aufrauen mittels Laser oder mechanisch, oder auf andere Weise für eine nachfolgende Bearbeitung zu aktivieren. Eine Bearbeitung kann auch eine Reinigung mit oder ohne Reinigungshilfsmittel umfassen.

Eine Arbeitsstation kann auch als Messtation ausgelegt sein, die das Werkstück in der Regel nicht verändert, also keine Bearbeitung darstellt.

In einer Bearbeitungsstation soll das Werkstück durch Drehung der Werkstückspindel mit einer Arbeitsdrehzahl um die Spindelrotationsachse rotieren. Eine Bearbeitungseinheit bearbeitet dann das sich drehende Werkstück.

Gemäß einem Aspekt der beanspruchten Erfindung ist vorgesehen, dass die Werkstückspindel nach Befestigen des Werkstücks an der Werkstückhaltevorrichtung und vor Erreichen der Bearbeitungsposition in eine Rotation mit zunehmender Drehzahl versetzt wird und dass das an der Werkstückspindel aufgenommene Werkstück dadurch bereits mit einer Eintrittsdrehzahl rotierend in die Bearbeitungsposition bewegt wird. Dies bedeutet, dass nach der Befestigung des Werkstücks an der Werkstückspindel diese bereits beschleunigt und dadurch mit zunehmender Drehzahl gedreht wird, bevor die Werkstückspindel durch die Bewegung der Spindelträgereinheit in der Bearbeitungsstation ankommt. Das Antriebssystem und die Steuereinheit können entsprechend konfiguriert sein und sind in einem Betriebsmodus entsprechend konfiguriert.

Die Beschleunigung der Drehbewegung kann unmittelbar nach Befestigen des Werkstücks an der Werkstückhaltevorrichtung beginnen, also noch bevor die Spindelträgereinheit in Bewegung gesetzt wird, um die Ladestation zu verlassen und die Werkstückspindel zur Bearbeitungsstation zu transportieren.

Durch diese Prozessführung rotiert das Werkstück bereits mit einer Eintrittsdrehzahl, wenn es die Bearbeitungsposition in der Bearbeitungsstation erreicht. Diese Eintrittsdrehzahl kann im Wesentlichen der für die Bearbeitung gewünschten Arbeitsdrehzahl entsprechen, so dass die Bearbeitung ohne Verzögerung beginnen kann, sobald das Werkstück sich in der Bearbeitungsposition befindet. Die Eintrittsdrehzahl kann aber auch von der Arbeitsdrehzahl abweichen, z.B. geringer als die Arbeitsdrehzahl sein, so dass noch eine weitere, kurze Beschleunigungsphase erforderlich ist.

In jedem Fall kann durch diese Vorgehensweise die unproduktive Nebenzeit für das Beschleunigen der Werkstückspindel vom Stillstand auf die Arbeitsdrehzahl teilweise oder vollständig in eine Phase vor Beginn der Bearbeitungsoperation verlagert werden. Dementsprechend reduziert sich die Verweildauer des Werkstücks bzw. der das Werkstück tragenden Werkstückspindel in der Bearbeitungsstation im Wesentlichen auf diejenige Zeit, die für die Bearbeitung am rotierenden Werkstück erforderlich ist, ggf. zuzüglich zu einer sehr kurzen Zeitspanne, um die Drehzahl von der Eintrittsdrehzahl auf die Arbeitsdrehzahl zu ändern.

Gegenüber anderen Vorgehensweisen, bei denen das Werkstück zunächst in der Bearbeitungsstation positioniert und erst dort allmählich auf Arbeitsdrehzahl gebracht wird, können bei Verfahren mit Vorab-Beschleunigung die Verweildauern eines Werkstücks in einer Bearbeitungsstation erheblich reduziert werden, weil wenigstens ein Teil der Beschleunigungsphase zur Erzeugung der Arbeitsdrehzahl bereits im Vorfeld außerhalb der Bearbeitungsstation abläuft.

Durch die Beschleunigung der Werkstückrotation zwischen dem Laden und dem Beginn der Bearbeitungsoperation in der Bearbeitungsstation kann ein erheblicher Zeitgewinn realisiert werden, was besonders bei Verfahren mit hohen Bearbeitungsleistungen oder entsprechend kurzen Verweildauern in der Bearbeitungsstation von erheblichem Vorteil ist. Ein weiterer Vorteil liegt darin, dass für die Beschleunigung der Werkstückspindel vom Stillstand auf die Arbeitsdrehzahl mehr Zeit zur Verfügung steht. Damit können auch Werkstücke mit höheren Massen allmählich auf Drehzahl gebracht werden, ohne die Antriebe zu überlasten und/oder es können kleinere und/oder schwächere und/oder sparsamer zu betreibende Spindelantriebe verwendet werden.

Diese Beschleunigung der Drehbewegung vor Erreichen der Bearbeitungsstation kann unabhängig von der Art der Anordnung des Spindelantriebs vorgesehen sein. Sie kann z.B. bei Bearbeitungsmaschinen mit "mitfahrenden" Spindelantrieben mit Vorteil genutzt werden. Die Beschleunigung kann auch vorgesehen sein bei Bearbeitungsmaschinen mit mindestens einem gestellfesten Spindelantrieb gemäß einer weiter unten beschriebenen Weiterbildung der Erfindung.

Die Vorteile dieser Vorgehensweise kommen ganz besonders bei Bearbeitungsverfahren zum Tragen, bei denen mit relativ hohen Arbeitsdrehzahlen des Werkstücks während der Bearbeitung. gearbeitet werden kann. Typische Arbeitsdrehzahlen können beispielsweise im Bereich von mehr als ca. 100 U/min liegen, vorzugsweise im Bereich von 150 U/min bis 600 U/min, beispielsweise im Bereich von 200 U/min bis 500 U/min. Damit sind z.B. Laserauftragsschweißverfahren oder andere additive Verfahren innerhalb kurzer Bearbeitungszeiten zu komplettieren. Für andere Bearbeitungsverfahren sind ggf. geringere Drehzahlen im Bereich einer oder weniger Werkstückdrehungen pro Minute günstiger, wie z.B. beim Schleifen.

Wie erwähnt kann die Bearbeitungsmaschine z.B. als Beschichtungsmaschine konfiguriert sein, die bei einem Beschichtungsverfahren verwendet wird.

Es ist möglich, mit dem Beschichtungsverfahren und mit der Beschichtungsmaschine Werkstücke nur an einer Seite mit einer rotationssymmetrischen Funktionsschicht zu versehen.

Einige Ausführungsbeispiele sind dagegen für eine beidseitige Beschichtung ausgelegt, wobei in einer ersten Beschichtungsoperation auf einen Oberflächenbereich einer ersten Seite eine erste rotationssymmetrische Funktionsschicht und in einer zweiten Beschichtungsoperation auf einen Oberflächenbereich einer zweiten Seite eine zweite rotationssymmetrische Funktionsschicht aufgebracht wird.

Bei manchen Verfahrensvarianten werden die erste und die zweite Beschichtungsoperation zeitlich überlappend, also phasenweise oder komplett gleichzeitig durchgeführt. Für eine gleichzeitige Beschichtung zweier gegenüberliegender Seiten kann es vorteilhaft sein, das Werkstück mit horizontaler Rotationsachse in der Beschichtungsstation anzuordnen und die im Wesentlichen in Vertikalebenen liegenden gegenüberliegenden Seiten gleichzeitig zu beschichten.

Bei anderen Ausführungsformen werden dagegen die erste und die zweite Beschichtungsoperation zeitlich nacheinander durchgeführt. Insbesondere kann es so sein, dass das Werkstück für die erste Beschichtungsoperation in einer ersten Orientierung an der Werkstückaufnahmevorrichtung befestigt wird, nach der ersten Beschichtungsoperation von der Werkstückaufnahmevorrichtung gelöst wird, in einer Wendeoperation von der ersten Orientierung in eine zweite Orientierung gewendet und in der zweiten Orientierung wieder an der Werkstückaufnahmevorrichtung befestigt wird. Dann kann die zweite Seite beschichtet werden.

Obwohl solche Wendeoperationen auch bei Ausführungsformen mit horizontal orientierten Spindelrotationsachsen möglich sind, wird das Wenden vorzugsweise in Kombination mit einer Anordnung des Werkstücks genutzt, bei der die Spindelrotationsachse der Werkstückspindel vertikal orientiert ist, so dass die zu beschichtenden Oberflächen im Wesentlichen in einer Horizontalebene liegen.

Im Fall einer gleichzeitigen Beschichtung an zwei gegenüberliegenden Seiten des Werkstücks kann es ausreichen, wenn die Beschichtungsmaschine eine einzige als Beschichtungsstation ausgelegte Arbeitsstation aufweist. Auch im Falle von Verfahrensvarianten, bei denen das Werkstück zwischen einer ersten und einer zweiten Beschichtungsoperation gewendet wird, kann eine einzige Beschichtungsstation ausreichen, sofern die Möglichkeit geschaffen ist, nach der ersten Beschichtungsoperation das Werkstück zu wenden und danach die zweite Beschichtungsoperation durchzuführen. Die Beschichtungsstation kann dazu eine integrierte Wendeeinheit aufweisen.

Gemäß einer Weiterbildung ist die Beschichtungsmaschine so ausgelegt, dass sie wenigstens zwei, insbesondere genau zwei, gesondert voneinander angeordnete Arbeitsstationen aufweist, die als Beschichtungsstationen ausgelegt sind.

Eine dafür ausgelegte Beschichtungsmaschine gemäß einer Weiterbildung umfasst mehrere entlang der Transportstrecke des Transportsystems angeordnete Arbeitsstationen, die in dieser Reihenfolge eine Ladestation, eine erste Beschichtungsstation mit wenigstens einer Beschichtungseinheit zum Beschichten einer ersten Seite des Werkstücks, eine Wendestation zum Wenden eines an einer Werkstückspindel aufgenommenen Werkstücks und wenigstens eine zweite Beschichtungsstation zum Beschichten einer zweiten Seite des Werkstücks aufweist. Die Verfahrensstufen "Beschichten der ersten Seite", "Wenden", "Beschichten der zweiten Seite" werden also räumlich getrennt und durch maschineninternen Transfer bzw. Transport nacheinander angefahren.

Zum Erzeugen rotationssymmetrischer Funktionsschichten auf zwei an gegenüberliegenden Seiten eines Werkstücks liegenden Oberflächenabschnitten des Werkstücks können z.B. folgende Schritte durchgeführt werden: Anordnen des Werkstücks in einer ersten Orientierung an der Werkstückaufnahmevorrichtung einer Werkstückspindel in einer Ladeoperation; Transportieren des an der Werkstückspindel aufgenommenen Werkstücks zu einer ersten Beschichtungsstation; Erzeugen einer ersten rotationssymmetrischen Funktionsschicht an einer ersten Seite des Werkstücks in der ersten Beschichtungsoperation, wobei das Werkstück mittels eines Spindelantriebs durch Drehung der Werkstückspindel um eine Rotationsachse rotiert wird und Beschichtungsmaterial von einer Beschichtungseinheit auf die zu beschichtende Oberfläche der ersten Seite aufgebracht wird; Transportieren des an der Werkstückspindel aufgenommenen Werkstücks zu einer Wendestation; Wenden des Werkstücks von der ersten Orientierung in eine zweite Orientierung in einer Wendeoperation; Transportieren des an der Werkstückspindel aufgenommenen gewendeten Werkstücks zu einer zweiten Beschichtungsstation; Erzeugen einer zweiten rotationssymmetrischen Funktionsschicht an der zweiten Seite des Werkstücks in der zweiten Beschichtungsstation, wobei das Werkstück mittels eines zweiten Antriebs durch Drehung der Werkstückspindel um eine Rotationsachse rotiert wird und Beschichtungsmaterial von einer Beschichtungseinheit auf die zu beschichtende Oberfläche der zweiten Seite aufgebracht wird; Transportieren des an der Werkstückspindel aufgenommenen Werkstücks zu einer Entladestation; Entnehmen des Werkstücks von der Werkstückspindel in einer Entladeoperation.

Es kann eine von der Ladestation gesonderte Entladestation vorgesehen sein. Das ist beispielsweise dann sinnvoll, wenn das Transportsystem für einen linearen Transport, also für einen Transport entlang einer geradlinigen Transportstrecke ausgelegt ist. Bei bevorzugten Ausführungsformen ist jedoch ein maschineninternes Transportsystem mit einer geschlossenen Transportstrecke vorgesehen, so dass die Ladestation auch als Entladestation fungiert. Hierdurch können die Beschickung der Maschine mit noch unbeschichteten Werkstücken und die Entnahme von beschichteten Werkstücken am gleichen Übergabepunkt erfolgen. Damit können hocheffiziente Beschichtungsmaschinen mit kompakten Dimensionen und entsprechend geringem Platzbedarf bzw. Footprint realisiert werden. Außerdem wird durch eine Verkettung mehrerer solcher Beschichtungsmaschinen mit einem externen Fördersystem besonders einfach möglich.

Bei manchen Ausführungsformen weist das Transportsystem einen um eine Tischdrehachse drehbaren Rundtisch bzw. Drehtisch als Spindelträgereinheit auf. Die Tischdrehachse kann vertikal oder horizontal orientiert sein, ggf. auch schräg zur Horizontalen und Vertikalen.

Bei einem geschlossenen Transfer bzw. einer geschlossenen Transportstrecke fungiert die Ladestation auch als Entladestation, dient also zum Be- und Entladen. Dies ist jedoch nicht zwingend. Beispielsweise ist auch eine lineare Transportstrecke möglich, bei der Ladestation und Entladestation an unterschiedlichen Enden der Transportstrecke liegen.

Das Beschichtungsverfahren und die Beschichtungsmaschine können mithilfe unterschiedlicher Beschichtungstechnologien realisiert werden. Gemäß einer Weiterbildung ist eine Beschichtungseinheit als Laserauftragsschweißeinheit ausgebildet und dafür konfiguriert, ein Metallpulver in Richtung der zu beschichtenden Oberfläche abzustrahlen und gleichzeitig einen Laserstrahl zu führen, der in einem Fokusbereichs so fokussiert wird, dass das Metallpulver im Fokusbereich aufgeschmolzen und auf der Werkstückoberfläche abgeschieden wird, um die Funktionsschicht zu bilden.

Besonders bevorzugt ist es, wenn die Beschichtungseinheit für das sogenannte EHLA-Verfahren konfiguriert ist. Das Kürzel EHLA steht bzw. für "Extrem-Hochgeschwindigkeits-Laser-Auftragsschweißen" (manchmal auch für "Extreme High-Speed Laser Material Deposition") und erlaubt besonders hohe Auftragsleistungen, so dass die gewünschten Beschichtungsflächen innerhalb kurzer Beschichtungszeiten beschichtet werden können. Beim EHLA-Verfahren erfolgt die Interaktion des Metallpulvers mit dem fokussierten Laserstrahl überwiegend oder ausschließlich innerhalb eines Fokusbereichs, der mit Abstand. vor der zu beschichtenden Fläche liegt (vgl. zum Beispiel DE 10 2011 100 456 A1). Auch andere Laserauftragsschweißverfahren können genutzt werden, insbesondere solche, bei denen das auftreffende Metallpulver erst auf der Werkstückoberfläche aufgeschmolzen wird.

Als Alternative zum Laserauftragsschweißen können beispielsweise folgende Beschichtungsverfahren genutzt werden: Flammspritzen, insbesondere Hochgeschwindigkeitsflammspritzen (HVOF, High-Velocity-Oxygen-Fuel), also ein thermisches Beschichtungsverfahren zur Oberflächenbearbeitung, ein Cold-Spray-Verfahren oder Ähnliches.

Ein Beitrag für einen störungsfreien Betrieb bei möglichst geringer Gefährdung der Umwelt ist bei manchen Ausführungsformen dadurch gegeben, dass jede Beschichtungsstation ein separates Schutzgehäuse aufweist, das einen Arbeitsraum der Beschichtungsstation umschließt. Insbesondere wenn als Beschichtungseinheit eine Laserauftragsschweißeinheit oder eine andere laserbasierte Beschichtungseinheit vorgesehen ist, kann dadurch die Sicherheit der Umgebung gegen fehlgeleitete Laserstrahlung erhöht werden. Außerdem kann eine Pulverableitung, z.B. durch Absaugung, gezielter eingesetzt werden. Zudem wird die Gefahr von Pulververschleppung zu einer anderen Bearbeitungsposition und/oder zu einem anderen Prozess reduziert werden.

In jedem Schutzgehäuse ist vorzugsweise nur der Wirkbereich einer einzigen Bearbeitungseinheit, insbesondere einer Laserbeschichtungseinheit, untergebracht. Dadurch sind hohe Sicherheitsanforderungen gut zu erfüllen und es sind kompakte Bauformen möglich. Zudem wird bei Laserbeschichtungseinheiten eine Pulververschleppung vermieden.

Gemäß einer Weiterbildung liegt eine Besonderheit des Verfahrens und der Bearbeitungsmaschine in der Art und Weise, wie die (mindestens eine) Werkstückspindel angetrieben wird. Gemäß einer Formulierung wird ein Drehmoment zum Drehen der Werkstückspindel mit Hilfe einer Drehmomentübertragungseinrichtung von einem nicht mit der Spindelträgereinheit bewegbaren, stationären Spindelantrieb zu der Werkstückspindel übertragen. Das Antriebssystem der Bearbeitungsmaschine weist somit wenigstens einen stationär, beispielweise gestellfest (d.h. am Maschinengestell) montierten Spindelantrieb und eine Drehmomentübertragungseinrichtung zum Übertragen von Drehmomenten von dem Spindelantrieb zu wenigstens einer zugeordneten Werkstückspindel auf.

Dieses Konzept ermöglicht es, auf sogenannte "mitfahrende" Spindelantriebe zu verzichten. Ein "mitfahrender" Spindelantrieb ist ein Spindelantrieb, der an der Spindelträgereinheit befestigt ist und sich mit dieser bewegen kann. Bei einem mitfahrenden Spindelantrieb kann die Übertragung von Drehmomenten vom Spindelantrieb zur Werkstückspindel konstruktiv relativ einfach gelöst werden. Beispielsweise kann eine Abtriebswelle des Spindelantriebs koaxial mit der Werkstückspindel montiert sein. Diesem konstruktiven Vorteil bei der Drehmomentübertragung stehen jedoch erhebliche Nachteile bezüglich konstruktiver Freiheitsgrade bei der Auslegung der Maschine und hinsichtlich der Dynamik der Bewegungen gegenüber. Die Spindelträgereinheit muss dann nämlich nicht nur das Gewicht der mindestens einen Werkstückspindel und eines daran eventuell angebrachten Werkstücks tragen, sondern auch das Gewicht des zugehörigen Spindelantriebs. Zudem muss die Zuführung von Energie und Signalen zum Spindelantrieb so ausgelegt sein, dass diese auch bei Bewegung der Spindelträgereinheit aufrechterhalten bleiben. Demgegenüber bringt ein Verzicht auf mitfahrende Spindelantriebe nach den Erkenntnissen der Erfinder erhebliche Vorteile. Zwar kann bei der Auslegung der Drehmomentübertragungseinrichtung bzw. des Antriebsstrangen gewisser konstruktiver Aufwand erforderlich sein, jedoch überwiegen bei Weitem die Vorteile einer geringen Gewichtsbelastung der Spindelträgereinheit und der damit verbundenen höheren Dynamik und auch die Vorteile einer einfacheren Versorgung des Spindelantriebs mit (in der Regel elektrischer) Energie und Signalen.

Die technologischen Vorteile kommen besonders stark zum Tragen, wenn eine Spindelträgereinheit mehrere Werkstückspindeln trägt, also beispielsweise zwei, drei, vier oder mehr Werkstückspindeln. Wenn diese ebenfalls mit nicht mitfahrenden Spindelantrieben gekoppelt sind, bleibt das Gewicht der Spindelträgereinheit mit Werkstückspindeln moderat, die Dynamik des Systems bleibt hoch und die Steuerung und Energieversorgung einfach und zuverlässig realisierbar.

Gemäß einer Weiterbildung trägt die Spindelträgereinheit mehrere Werkstückspindeln, insbesondere drei oder vier Werkstückspindeln, wobei für jede der Werkstückspindeln ein zugeordneter, gestellfest montierter Spindelantrieb vorgesehen ist.

Es ist möglich, die Konstruktion so auszulegen, dass eine lösbare Antriebsverbindung zwischen Spindelantrieb und Werkstückspindel vorliegt. Beispielsweise kann an jeder Arbeitsstation einer Mehrstationen-Bearbeitungsmaschine ein gestellfest montierter Spindelantrieb vorgesehen sein, der jeweils mit derjenigen Werkstückspindel temporär gekoppelt wird, die sich in der Arbeitsstation befindet.

Hingegen ist bei bevorzugten Ausführungsformen vorgesehen, dass jede Werkstückspindel permanent in Antriebsverbindung mit einem zugeordneten (ortfesten) Spindelantrieb steht. Damit entfallen potentielle Störursachen beim Ankoppeln und Abkoppeln zwischen Spindelantrieb und Werkstückspindel. Außerdem erlaubt eine permanente Kopplung zwischen Werkstückspindel und zugehörigem Spindelantrieb, dass die Werkstückspindel auch dann angetrieben wird, wenn sich die Spindelträgereinheit zum Transfer von Werkstückspindel bewegt.

Gemäß einer Weiterbildung ist vorgesehen, dass wenigstens ein Spindelantrieb mehrere Werkstückspindeln gleichzeitig antreibt, z.B. genau zwei. In konstruktiver Hinsicht kann es so sein, dass die Anzahl von Spindelantrieben kleiner ist als die Anzahl von Werkstückspindeln, z.B. nur halb so groß. Dadurch können konstruktiver Aufwand und Kosten des Antriebssystems reduziert werden.

Bei bevorzugten Ausführungsformen weist die Spindelträgereinheit einen Rundtisch auf, der mittels eines Rundtischantriebs um eine Rundtischdrehachse rotierbar ist. Der Begriff "Rundtisch" bezeichnet im Rahmen dieser Anmeldung die relativ zum Maschinengestell drehbare Komponente, die meist eine flache Bauform aufweist und daher auch als Rundtischplatte bezeichnet wird. Die drehbare Komponente kann kreisrund sein, dies ist jedoch nicht zwingend. Ein Rundtisch kann z.B. auch kreuzförmig ausgebildet sein. Die Rundtischdrehachse ist bei manchen Ausführungsformen vertikal ausgerichtet, so dass der Rundtisch in einer Horizontalebene liegt. Die Rundtischdrehachse kann jedoch auch schräg oder senkrecht zur Vertikalrichtung ausgerichtet sein, insbesondere in horizontaler Richtung. Die Werkstückspindeln können am Umfang des Rundtischs so angeordnet sein, dass sie auf einer kreisförmigen oder kreisbogenförmigen Transportstrecke zwischen den Arbeitsstationen einer Mehrstationen-Bearbeitungsmaschine transportiert werden können. Jeweils zwei Werkstückspindeln können ein Paar bilden und über einen gemeinsamen Spindelantrieb angetrieben werden. Werkstückspindeln können z.B. so verteilt sein, dass es Paare von diametral gegenüberliegenden Werkstückspindeln gibt. Gemäß einer Weiterbildung ist jeweils für die beiden Werkstückspindeln eines Paares diametral gegenüberliegender Werkstückspindeln ein gemeinsamer Spindelantrieb vorgesehen. Bei derartigen Ausführungsformen ist die Anzahl der Spindelantriebe nur halb so groß wie die Anzahl der Werkstückspindeln.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind.
- Fig. 1: zeigt eine schrägperspektivische Ansicht eines Ausführungsbeispiels einer Bearbeitungsmaschine, die als Beschichtungsmaschine zum Beschichten von Bremsscheiben konfiguriert ist;
- Fig. 2: zeigt eine geteilte Schnittansicht eines Ausführungsbeispiels einer Rundtisch-Beschichtungsmaschine zur Erläuterung eines Beispiels für ein Antriebskonzept;
- Fig. 3: zeigt ein Beispiel einer Fertigungsanlage mit mehreren Beschichtungsmaschinen und einer nachgeschalteten Schleifmaschine;
- Fig. 4 bis 6: zeigen schematisch alternative Antriebskonzepte gemäß anderer Ausführungsbeispiele.

### DETAILLIERTE BESCHREIBUNG DER AUSFÜHRUNGSBEISPIELE

Im Folgenden werden anhand von Beispielen verschiedene Aspekte von Verfahren zur Herstellung beschichteter Bremsscheiben und einiger dabei verwendbarer Bearbeitungsmaschinen und Systeme beispielhaft erläutert.

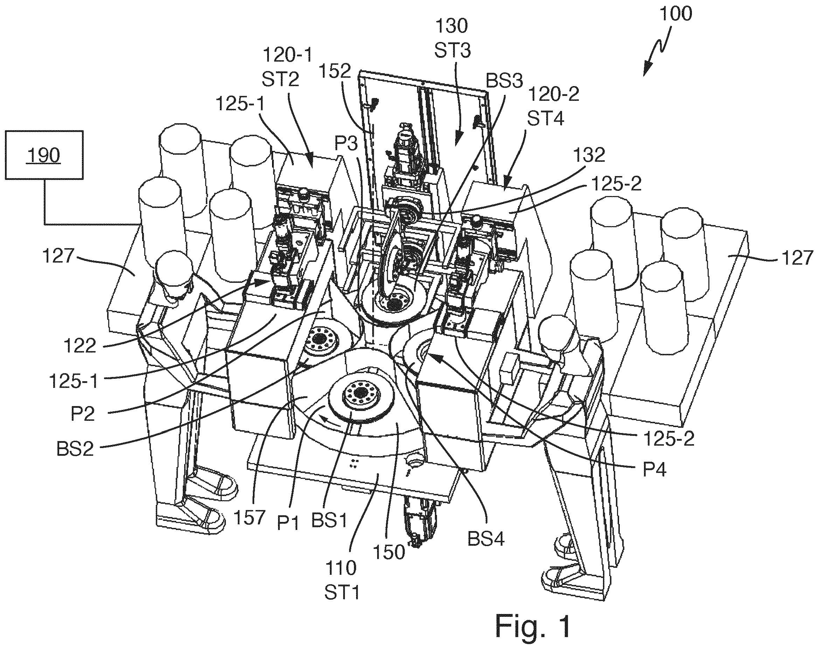

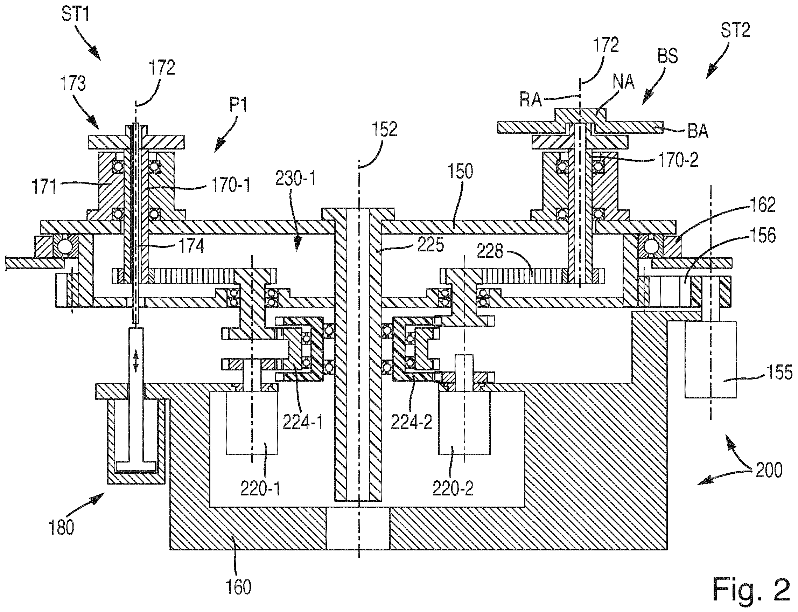

Fig. 1 zeigt eine schrägperspektivische Ansicht eines Ausführungsbeispiels einer als Rundtaktmaschine ausgelegten Bearbeitungsmaschine 100, die als Beschichtungsmaschine zum Beschichten von Werkstücken in Form von Bremsscheiben BS1 bis BS4 konfiguriert ist. Fig. 2 zeigt eine geteilte Schnittansicht Ansicht der Beschichtungsmaschine mit Komponenten des Antriebsystems. In Fig. 2 sind die Schnittebenen links und rechts einer zentrischen Rundtischachse 152 um 90° gegeneinander versetzt, d.h. die Darstellung zeigt zwei um 90° zueinander gedrehte Schnittebenen.

Jede der Bremsscheiben hat einen zum Beispiel aus Grauguss bestehenden Grundkörper mit einem zentralen Nabenabschnitt NA, der der Befestigung der Bremsscheibe an einer Fahrzeugachse dient, sowie einen kreisringförmigen Bremsabschnitt BA, der den Nabenabschnitt umschließt. Die Massenverteilung des Grundkörpers ist insgesamt rotationssymmetrisch zur Rotationsachse RB der Bremsscheibe. Der Bremsabschnitt hat zwei axial gegenüberliegende, zueinander parallele Oberflächen. Diese sollen jeweils mit einer in Bezug auf die Rotationsachse rotationssymmetrischen Beschichtung bzw. Funktionsschicht versehen werden, deren freie Oberfläche schließlich als Reibfläche der Bremsscheibe dienen soll.

Im Beispielsfall sollen die kreisringförmigen Bremsflächen auf beiden Seiten mithilfe einer speziellen Variante des Laserauftragsschweißens beschichtet werden, nämlich mithilfe einer Variante des Extremen Hochgeschwindigkeits-Laserauftragsschweißens, das auch unter dem Begriff "EHLA-Verfahren" bekannt ist.

Die Beschichtungsmaschine 100 ist als numerisch gesteuerte Rundtaktmaschine mit insgesamt vier Arbeitsstationen konfiguriert. Alle Funktionen werden über Steuerbefehle einer Steuereinheit 190 realisiert, die lokal (an oder neben der Maschine) oder remote, z.B. in einem anderen Raum, angeordnet sein kann. An der in Fig. 1 vorne liegenden Vorderseite befindet sich eine Be- und Entladestation 110, die hier auch als erste Station ST1 bezeichnet wird. Dort wird eine Bremsscheibe (hier BS1) in horizontaler Ausrichtung, d.h. mit vertikal ausgerichteter Rotationsachse ("Plattenspieler-Anordnung"), auf einer später noch beschriebene Werkstückspindel aufgenommen. Die Befestigung kann z.B. über Einspannen an einer Werkstückhaltevorrichtung der Werkstückspindel derart erfolgen, dass die Bremsscheibe drehfest eingespannt bzw. aufgespannt ist und die Rotationsachse der Bremsscheibe koaxial zur Spindelrotationsachse liegt. Eine drehfeste Verbindung zur Werkstückspindel kann auch durch Niederhalten oder Festhalten von oben realisiert werden.

Eine derart geladene Bremsscheibe wird dann durch Drehung des Rundtisches um 90° im Uhrzeigersinn zu einer Bearbeitungsposition in einer ersten Laserbeschichtungsstation 120-1 transportiert, die auch als zweite Station ST2 bezeichnet wird. In dieser Station wird die oben liegende erste Seite der des Bremsabschnitts der Bremsscheibe beschichtet. Eine Weitertaktung um 90° bewegt die einseitig beschichtete Bremsscheibe zu einer Wendestation 130 (dritte Station ST3), in der die einseitig beschichtete Bremsscheibe mithilfe eines Manipulators ergriffen, von der Werkstückhaltevorrichtung abgenommen und um 180° um eine zur Rotationsachse senkrechte Achse gedreht wird, so dass die bisher unten liegende, noch unbeschichtete zweite Seite oben liegt. In dieser Orientierung wird die Bremsscheibe wieder auf die Werkstückspindel aufgesetzt und festgespannt.

Eine Weitertaktung um 90° bringt die Bremsscheibe dann in eine zweite Laserbeschichtungsstation 120-2 (vierte Station ST4), in der die bisher unbeschichtete zweite Seite der Bremsscheibe beschichtet wird.

Danach wird die beidseitig beschichtete Bremsscheibe durch 90°-Drehung zur ersten Station ST1, also zur Be- und Entladestation 110, transportiert, von wo sie zum Beispiel mittels eines Roboters oder einer anderen Handling-Einrichtung oder auch manuell entladen werden kann.

Auf die dann frei gewordene Werkstückspindel kann eine neu zu beschichtende Bremsscheibe aufgespannt werden, so dass mit Ausnahme der Wechselzeiten jeweils alle vier Werkstückspindeln mit Bremsscheiben belegt sind und sich jeweils in unterschiedlichen Phasen der Bearbeitung bzw. Beschichtung befinden.

In jeder der beiden Laserbearbeitungsstationen 120-1, 120-2 gibt es eine einzige Laserbearbeitungseinheit 122. Der Begriff "Laserbearbeitungseinheit" steht hier für eine Auftragsvorrichtung, die einen pulverförmigen Ausgangswerkstoff, in der Regel ein Metallpulver, in Richtung der zu beschichtenden Oberfläche abstrahlt und gleichzeitig einen Laserstrahl führt, der beim EHLA-Verfahren so fokussiert wird, dass das Metallpulver vor Erreichen der Werkstückoberfläche aufgeschmolzen und dann im aufgeschmolzenen Zustand auf die Werkstückoberfläche abgeschieden wird, um die Funktionsschicht zu bilden. Das Metallpulver wird in separaten Vorratsbehältern vorgehalten und den Laserbearbeitungseinheiten von Pulverförderern 127 zugeführt.

Die Laserbearbeitungseinheiten weisen jeweils Antriebe für eine horizontale oder eine axiale Bewegung auf. Mit der horizontalen Bewegung kann die Laserbearbeitungseinheit in Radialrichtung zur Rotationsachse des Werkstücks verfahren werden, um Laserauftragsschweißspuren spiralförmig auf die zu beschichtende Oberfläche aufzubringen. Die axiale Bewegung wird bei der Zustellung und der Einstellung des exakten Abstands zur Oberfläche genutzt.

Es ist möglich, dass die als Laserbearbeitungseinheit ausgebildeten Beschichtungseinheit in Bezug auf die zu beschichtende Oberfläche so orientiert ist, dass der aufschmelzende Laserstrahl im Wesentlichen in Normalenrichtung zur Oberfläche orientiert ist. Beim Ausführungsbeispiel weist die als Laserauftragsschweißeinheit ausgebildete Beschichtungseinheit dagegen eine parallel zur Strahlaustrittsrichtung des Laserstrahls verlaufende Hauptachse auf, die in einem Neigungswinkel von mehr als 5°, z.B. bis zu ca. 10°, zur Spindelrotationsachse und/oder zur Oberflächennormalen der zu beschichtenden Oberfläche angestellt ist. Dadurch können auf einfache Weise Störungen des Beschichtungsprozesses durch an der zu beschichtenden Oberfläche reflektierte Laserstrahlung vermieden werden. Dadurch ist ein kontinuierlicher Betrieb der Beschichtungseinheit mit im Wesentlichen gleichmäßigen Auftragseigenschaften ohne wesentliche Schmauchspuren möglich.

Die Wendestation 130 (dritte Station ST3) weist einen Greifer 132 auf, der die Bremsscheibe an ihrem Umfang greifen kann, sowie einen Antrieb zum Wenden des Werkstücks durch Drehen des Greifers um eine horizontale Drehachse. Für das Abheben und Aufsetzen ist eine vertikale translatorische Maschinenachse für den Greifer vorgesehen.

Zum Transport der Bremsscheiben zwischen den Arbeitsstationen dient ein maschineninternes Transportsystem mit einem ein Rundtisch bzw. Drehtisch 150, der auf bzw. in der Maschinenbasis 160 um eine vertikale Drehtischachse 152 drehbar gelagert und mithilfe eines Rundtischantriebs 155 um die vertikale Rundtischachse unbegrenzt drehbar ist. Der plattenförmige Rundtisch ist mithilfe von Kreuzrollenlagern auf einer gestellfesten Grundplatte 162 drehbar gelagert. Wie in Fig. 2 gut zu erkennen ist, ist der Rundtischantrieb 155 seitlich neben dem Rundtisch an der Grundplatte 162 montiert und treibt den Rundtisch über einen Zahnriemen 156 an, der über den mit einer Verzahnung versehenen Umfang des Rundtisches und ein entsprechendes Antriebszahnrad auf der Abtriebswelle des Rundtischantriebs läuft.

Für die Durchführung des Beschichtungsprozesses müssen die Bremsscheiben um ihre Rotationsachse rotiert werden, gleichzeitig erfolgt dann die Laserbeschichtung mehr oder weniger spiralförmig von innen nach außen oder umgekehrt durch Verfahren der Laserbearbeitungseinheiten radial zur Rotationsachse der Bremsscheiben. Die Drehzahl wird dabei kontinuierlich so verändert, dass die lokale Auftragsgeschwindigkeit im gesamten zu beschichtenden Teil des Bremsabschnitt im Wesentlichen konstant ist.

Die Bremsscheiben sollen für den Beschichtungsprozess in eine relativ schnelle Rotation versetzt werden, typische Arbeitsdrehzahlen für den Beschichtungsprozess können im Bereich mehrerer Hundert Umdrehungen pro Minute liegen, beispielsweise zwischen 200 U/min und 600 U/min. Dies wird wie folgt erreicht.

Der Rundtisch 150 bzw. die Rundtischplatte, die als Spindelträgereinheit 150 dient, trägt um jeweils 90° umfangsversetzt vier Werkstückspindeln 170-1 etc., an vier jeweils 90° zueinander umfangsversetzten Positionen P1 bis P4. Zwei in 90° Winkel zueinander liegende Werkstückspindeln 170-1 und 170-2 an den Positionen P1 und P2 sind in Fig. 2 im Längsschnitt zu erkennen.

Jede der Werkstückspindeln ist in einer fest an der Oberseite des Rundtischs 150 montierten Lagerhülse 171 um eine vertikale Spindelrotationsachse 172 gegenüber der Lagerhülse bzw. dem Rundtisch 150 unbegrenzt drehbar gelagert. Jede frei drehbare Werkstückspindel hat an ihrem oberen Ende einen Spannkopf 173, der als verstellbare Werkstückaufnahmevorrichtung 173 zum Befestigen der Bremsscheibe BS dient. Der Spannkopf wird von unten mittels eines pneumatischen Aktors 180 betätigt. Eine ebene Anlagefläche der Bremsscheibe liegt dabei auf der ebenen Oberseite des Spannkopfs auf.

Die Aktoren 180 zur Betätigung des Spannkopfs bzw. der Werkstückhaltevorrichtung 173 sind nicht am Rundtisch 150 angebracht, sondern gestellfest jeweils im Bereich der Ladestation und der Wendestation an einer Konsole des Maschinengestells 160 montiert. Der Spannkopf 173 wird über eine Druckstange 174 betätigt, die aus dem unteren Ende der Werkstückspindel herausragt. Der Spannkopf ist in Einspannkonfiguration vorgespannt, so dass in Abwesenheit von Druck der Spannkopf das Werkstück festklemmt. Ein Druck von unten auf die Druckstange gibt das Werkstück frei.

Anstelle eines Spannkopfs, der von Seiten der Werkstückspindel betätigt wird, kann z.B. auch ein Niederhalter vorgesehen sein.

Die kreissektorförmigen Bereiche der Werkstückspindeln bzw. der darauf angebrachten Bremsscheiben sind an der Oberseite des Rundtisches 150 mechanisch voneinander separiert. Dazu ist an der Oberseite des Rundtisches eine Anordnung mit vertikalen Schutzblechen 157 vorgesehen, die jeweils einen 90°-Sektor um eine Werkstückspindel herum gegenüber den anderen Sektoren abgrenzen.

Jede der Laserbearbeitungsstationen 170-1, 170-2 hat eine eigene Abdeckung bzw. ein eigenes Gehäuse 125-1, 125-2, welches den zugehörigen Arbeitsraum, also den Bereich der Interaktion zwischen Laserbearbeitungseinheit und Bremsscheibe, weitgehend umschließt. Die Laserbearbeitungseinheit ragt durch eine obere Durchlassöffnung dieses Gehäuses von oben in den vom Gehäuse umschlossenen Arbeitsraum hinein.

Es ist keine Gesamt-Abdeckung vorgesehen, die die beiden Laserbearbeitungsstationen, die Wendestation und die Be- und Entladestation abdeckt. Die Be- und Entladestation ist dadurch bequem für den Be- und Entladevorgang frei zugänglich. Im Bereich der Wendestation 130 können Schutzvorrichtungen zum Schutz eines Bedieners gegen ungewollten Eingriff in den Wendebereich vorgesehen sein.

Das Antriebssystem 200 zur Drehung der Werkstückspindeln bzw. der daran aufgenommenen Bremsscheiben weist einige Besonderheiten auf, die nachfolgend vor allem mit Bezug auf die Fig. 2 näher erläutert werden.

Wie erwähnt, werden die Werkstückspindeln 170-1 etc. vom Rundtisch 150 getragen, der als Spindelträgereinheit 150 dient. Die Antriebe zur Erzeugung der Drehbewegung der Werkstückspindeln, also die Spindelantriebe, sind dagegen nicht am Rundtisch befestigt, sondern ortsfest bzw. gestellfest an einer Komponente des Maschinengestells 160 im Bereich unterhalb der Grundplatte 162. Der Rundtisch 150 hat also keine mitfahrenden Spindelantriebe für die Werkzeugspindeln. Das spart erheblich Gewicht.

Weiterhin ist zwar für jede Werkstückspindel ein Spindelantrieb vorgesehen, die Konstruktion ist aber so ausgelegt, dass für die vier Werkstückspindeln nur zwei Spindelantriebe (erster Spindelantrieb 220-1, zweiter Spindelantrieb 220-2) benötigt werden.

Das Drehmoment zum Drehen einer Werkstückspindel wird jeweils mithilfe einer Drehmomentübertragungseinrichtung (generelles Bezugszeichen 230) von dem zugeordneten gestellfesten Spindelantrieb auf die Werkstückspindel übertragen.

Das Antriebssystem 200 verfügt über zwei voneinander unabhängige Antriebsstränge für die vier Werkstückspindeln, wobei jeweils zwei einander diametral gegenüberliegende Werkstückspindeln durch einen gemeinsamen Spindelantrieb angetrieben werden. Der Spindelantrieb ist mit den beiden zugeordneten Werkstückspindeln permanent antriebsgekoppelt, so dass Drehmoment nicht nur dann übertragen werden kann, wenn sich eine Werkstückspindel an einer der Arbeitspositionen befindet, sondern auch während der Drehung des Rundtisches zum Wechsel zwischen Arbeitsstationen. Die Drehmomentübertragung erfolgt also unabhängig von den Arbeitsstationen. Dadurch ist es möglich, eine Werkstückspindel schon während der Drehung des Rundtisches anzutreiben.

Die Spindelantriebe sind ortsfest verbaut, wodurch eine einfache Zuführung der Energie zu den Antrieben möglich ist. Beide Antriebsstränge verlaufen streckenweise koaxial zueinander und koaxial zur Rundtischdrehachse. Dazu sind in den Antriebssträngen ineinander geschachtelte Hohlwellen integriert, die höhenmäßig gestaffelt Antriebselemente und Abtriebselemente aufweisen.

Anhand der Fig. 2 wird eine Umsetzungsmöglichkeit erläutert, die bei dem Ausführungsbeispiel von Fig. 1 realisiert sein kann. Zur besseren Verständlichkeit wird nochmals auf folgende Bedeutungen der Begriffe hingewiesen. Das Ausführungsbeispiel der Beschichtungsmaschine hat vier Arbeitsstationen ST1 bis ST4, nämlich die Be- und Entladestation (erste Station ST1), die beiden Laserbearbeitungsstationen (zweite Station ST2 und vierte Station ST4) sowie die Wendestation (dritte Station ST3). Diese Stationen sind im Raum bzw. bezogen auf das Maschinengestell 160 ortsfest.

Die drehbare Platte 150 des Rundtisches, die als Spindelträgereinheit dient, trägt vier Werkstückspindeln an vier jeweils 90° zueinander umfangsversetzten Positionen P1 bis P4. Die "Positionen" der Werkstückspindeln drehen mit dem Rundtisch. Jede Rundtischposition P1 bis P4 gelangt durch die Drehung des Rundtisches sukzessive in jede der Arbeitsstationen ST1 bis ST4. Am Rundtisch liegen sich die Positionen P1 und P3 sowie die Positionen P2 und P4 jeweils diametral zur Rundtischachse gegenüber.

Der vertikale Schnitt im linken Teil von Fig. 2 geht durch die Be- und Entladestation oder die Wendestation, die einander diametral gegenüberliegen. Dort, wo die Bremsscheibe BS an der Oberseite einer Werkstückspindel aufgenommen ist (rechter Teil von Fig. 2), befindet sich beispielsweise eine Laserbearbeitungsstation.

Die Werkstückspindeln an Position P1 und Position P3 (in Fig. 2 nicht dargestellt) des Rundtisches liegen einander diametral zur Rundtischachse gegenüber. Sie werden durch einen gemeinsamen ersten Spindelantrieb 220-1 angetrieben, der an einer Komponente des Maschinengestells 160 ortsfest mit vertikaler Ausrichtung seiner Abtriebswelle montiert ist. Der erste Spindelantrieb 220-1 steht über eine aus mehreren Komponenten bestehende Drehmomentübertragungseinrichtung 230-1 ständig in Antriebsverbindung mit den beiden zugeordneten Werkstückspindeln.

Die Drehmomentübertragungseinrichtung 230-1 umfasst ein an der Abtriebswelle des ersten Spindelantriebs montiertes Zahnrad 222, welches mit einem unteren Zahnkranz einer ersten Hohlwelle 224-1 kämmt, die koaxial zur Rundtischachse 152 drehbar gelagert ist und mit axialem Abstand oberhalb des unteren Zahnkranzes einen oberen Zahnkranz aufweist. Dieser kämmt mit einem unteren Zahnkranz eines mit vertikaler Drehachse gelagerten Übertragungselements 226, welches einen oberen Zahnkranz aufweist, der als eines von zwei Umlenkelementen für einen Zahnriemen 228 dient, dessen anderes mit Verzahnung ausgestattetes Umlenkelement an der Werkstückspindel 170-3 angebracht ist.

Diametral gegenüber ist eine analoge Drehmomentübertragung zur dritten Werksstückspindel vorgesehen. Dadurch steht der erste Spindelantrieb 220-1 permanent in Antriebsverbindung mit jeder der beiden diametral gegenüberliegenden Werkstückspindeln an Position P1 und P3.

Für die beiden anderen, einander diametral gegenüberliegenden Werkstückspindeln an Position P2 und P4 gibt es einen zweiten Spindelantrieb 220-2, der maschinenfest montiert ist und der ein Zahnrad antreibt, welches an einem unteren Zahnkranz einer zweiten Hohlwelle 224-2 angreift, die ebenfalls koaxial zur Rundtischachse 152 drehbar gelagert ist. Auch die zweite Hohlwelle weist axial versetzt zum antriebsseitigen Zahnkranz einen abtriebsseitigen Zahnkranz auf, der in Fig. 2 oberhalb des abtriebsseitigen Zahnkranzes für den ersten Antriebsstrang erkennbar ist. Die Übertragung der Drehung zu den zugeordneten Werkstückspindeln erfolgt dann wieder über ein Übertragungselement mit zwei Zahnkränzen sowie einen Zahnriemen, der auch um die Werkstückspindeln herumläuft.

Die beiden Antriebsstränge für die jeweiligen Paare von Werkstückspindeln sind also im Bereich der ineinander geschalteten Hohlwellen 224-1, 224-4 koaxial zueinander und koaxial zur Rundtischachse 152 angeordnet. Die unteren Zahnkränze der Hohlwellen dienen jeweils als Antriebselement, die oberen Zahnkränze als Abtriebselement der jeweiligen Hohlwelle.

Die beiden Hohlwellen sitzen auf einer inneren Lagerhülse 225, die zentriert zur Rundtischachse 152 am Rundtisch 150 befestigt ist. Die Lagerhülse hat einen inneren Durchgangskanal, der als Zufuhrkanal für Leitungen zum Anschluss von eventuellen Komponenten auf dem Rundtisch genutzt werden kann (optional).

Die Beschichtungsmaschine 100 kann wie folgt betrieben werden. In einem Beschichtungsprozess sei eine beidseitig beschichtete Bremsscheibe an der Be- und Entladestation 110 gerade manuell, halbautomatisch oder automatisiert mithilfe eines Handling-Systems entnommen worden. Um dies zu tun, wurde die Druckstange 174 des Spannkopfs mithilfe des Aktors 180 von unten pneumatisch betätigt, so dass diese die Bremsscheibe freigegeben hat. Auf den nun freien Spannkopf wird eine neue, noch unbeschichtete Bremsscheibe bzw. deren Grundkörper aufgespannt. Durch Freigeben des Spannkopfs schaltet dieser in eine Spannkonfiguration, die energielos gespeichert wird und somit auch bei eventuellen Störungen das Werkstück sicher greift. Beim Aufsetzen des Werkstücks und beim Festspannen dreht sich die Werkstückspindel 170-1 nicht.

Danach soll durch Weitertakten des Rundtisches um 90° im Uhrzeigersinn die unbeschichtete Bremsscheibe zur ersten Laserbearbeitungsstation 120-1 (erste Station ST1) transportiert werden. Um zu ermöglichen, dass dort der Laserbeschichtungsprozess unmittelbar nach Eintreffen des Werkstücks beginnen kann, ohne noch beschleunigt werden zu müssen, wird die Werkstückspindel an Position P1 unmittelbar nach Aufsetzen und Einspannen des Werkstücks mithilfe des ersten Spindelantriebs 220-1 in eine Drehung mit zunehmender Drehzahl versetzt und damit beschleunigt. Die Steigerung der Drehzahl setzt sich auch beim Drehen des Rundtisches zum Transport in die erste Laserbearbeitungsstation 120-1 fort, so dass das Werkstück bereits mit einer erheblichen Eingangsdrehzahl in die Laserbearbeitungsstation 120-1 eintritt, so dass dort eine weitere Beschleunigung auf die erforderliche Arbeitsdrehzahl nicht erforderlich ist oder innerhalb kürzester Zeit erfolgen kann. Somit kann der Beschichtungsprozess in der Laserbearbeitungsstation im Wesentlichen sofort beginnen, nachdem das sich bereits schnell drehende Werkstück die Bearbeitungsposition innerhalb der Laserbearbeitungsstation erreicht hat.

Während der Beschichtungsprozess abläuft, kann bereits an der Be- und Entladestation ein neues fertig beschichtetes Werkstück entnommen und ein neues unbeschichtetes Werkstück eingesetzt und befestigt werden.

Nach Abschluss der laserbasierten Beschichtung wird der Rundtisch weitergeschaltet. Vor, bei oder unmittelbar nach Beginn der Drehbewegung wird der Spindelantrieb abgebremst, so dass die Drehbewegung der einseitig beschichteten Bremsscheibe verlangsamt wird und diese mehr oder weniger langsam drehend oder bereits stillstehend in die Wendestation 130 gelangt. Dort wird die Bremsscheibe mithilfe eines Greifers an ihrem äußeren Umfang ergriffen, durch Absenken der Werkstückspindel und/oder Herauffahren des Werkstückgreifers von der Werkstückaufnahmevorrichtung gelöst und um 180° gewendet sowie wieder auf die Werkstückspindel aufgesetzt. Zum Abnehmen, Wenden und Wiederaufsetzen wird der Spannkopf durch Drücken auf die Druckstange von unten entspannt. Ist die Bremsscheibe wieder aufgesetzt, wird der Druck entlastet und der Spannkopf spannt das Werkstück selbsttätig.

Unmittelbar nach Abschluss der Wendeoperation und gegebenenfalls noch vor Beginn der Weitertaktung wird der Spindelantrieb wieder in Gang gesetzt, so dass die einseitig beschichtete Bremsscheibe schon auf dem Weg zur zweiten Laserbearbeitungsstation (Station ST3) im Wesentlichen auf deren Arbeitsdrehzahl beschleunigt wird und dort schon schnell drehend ankommt, so dass unmittelbar nach Eintreffen der Werkstückspindel an der richtigen Arbeitsposition die Laserbeschichtungsoperation beginnen kann. Ist diese abgeschlossen, bremst der erste Spindelantrieb die Werkstückspindel vor Beginn und während des Wegs zur Be- und Entladestation wieder ab, so dass dort das Werkstück gleich nach Ankunft entladen werden kann.

Während eines Bearbeitungszyklus können weitere Operationen durchgeführt werden. Unter anderem ist bei einem Ausführungsbeispiel vorgesehen, dass das Werkstück nach Abschluss der ersten Beschichtungsoperation und vor Beginn der Wendeoperation und/oder nach der zweiten Beschichtungsoperation und vor der Entnahme einer Reinigung unterzogen wird. Damit können lose Reste von Beschichtungsmaterial und/oder Pulverreste beseitigt werden, wodurch eine Verschleppung solcher Verunreinigungen zu nachfolgenden Operationen verhindert wird. Die Reinigung kann z.B. mittels Absaugens und/oder mittels Abblasens der Verunreinigung erfolgen. Alternativ oder zusätzlich kann das Werkstück zur Reinigung oder zur Unterstützung der Reinigung mit Ultraschall angeregt werden, um lose angebundene Verunreinigungen vom Werkstück zu lösen. Durch solche Reinigungsoperationen kann die Endqualität der beschichteten Bremsscheibe ggf. deutlich verbessert werden.

Eine solche Beschichtungsmaschine kann somit zunächst unbeschichtete Bremsscheiben-Grundkörper aufnehmen und beidseitig mit einer Funktionsschicht versehen. Dazu werden nur sehr kurze Taktzeiten benötigt, insbesondere weil Beschleunigungsvorgänge auf die Arbeitsdrehzahl schon vor Eintreffen der Bremsscheibe in der jeweiligen Laserbearbeitungsstation eingeleitet und ggf. vollendet werden können. Es gibt somit innerhalb der Laserbearbeitungsstation nur minimale Wartezeiten. Damit wird auch bei kontinuierlichem Betrieb der Pulverförderung in den Laserbearbeitungsstationen nur sehr wenig Zeit und Material zwischen den einzelnen Beschichtungsoperationen verschwendet. Damit ist eine hochproduktive Herstellung beidseitig beschichteter Bremsscheiben bei geringen Gesamtkosten, insbesondere für Betriebsmittel, möglich.

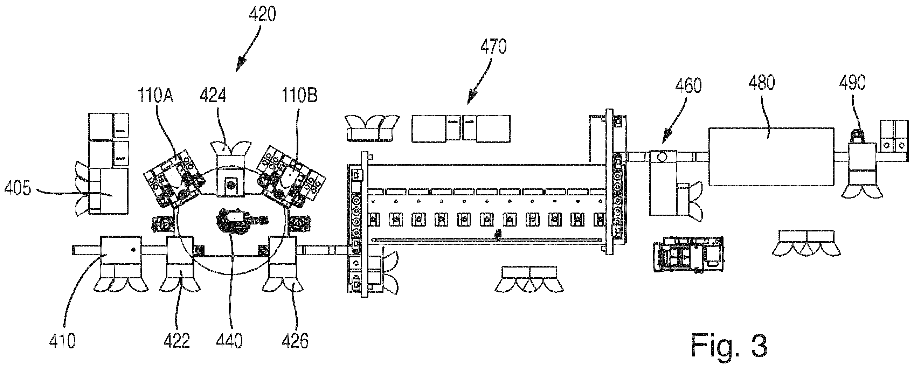

Anhand von Fig. 3 wird ein Ausführungsbeispiel einer Fertigungsanlage 400 zur Fertigung von beschichteten Bremsscheiben erläutert. In die Fertigungsanlage sind zwei Beschichtungsmaschinen 100A und 100B der beschriebenen Art sowie eine Schleifmaschine 460 integriert, die ebenfalls als Bearbeitungsmaschine der hier beschriebenen Art (ohne mitfahrende Spindelantriebe) aufgebaut sein kann. Die Funktionsbeschichtung für die Bremsscheiben soll zwei Lagen aufweisen, nämlich eine unmittelbar auf den metallischen Grundkörper aufgebrachte Haftschicht sowie eine darauf aufgebrachte Verschleißschicht, die wesentlich härter ist als das Graugussmaterial des Grundkörpers.

Die Fertigungsanlage 400 umfasst in Fig. 3 links eine Vorprüfstation 410, in der die angelieferten Bremsscheiben-Grundkörper auf Tauglichkeit zur Beschichtung geprüft werden. In der Vorprüfstation findet im Beispielsfall auch eine Typerkennung statt. Dabei werden bestimmte charakterisierende Merkmale der angelieferten Grundkörper (z.B. Außendurchmesser, Art und Größe von Anlageflächen und/oder Abstand zwischen Rotationsachse und Reibfläche) messtechnisch erfasst, um den Typ der Bremsscheibe zu identifizieren. Abhängig vom festgestellten Typ kann dann die Programmierung der Bearbeitungsmaschinen automatisiert ausgewählt werden. Somit ist die Fertigungsanlage prinzipiell in der Lage, auch mit Kleinserien bis hin zur Losgröße 1 zu arbeiten.

Die typisierten verwendbaren Grundkörper werden dann mithilfe einer linearen Förderstrecke zu einem Beschichtungssystem 420 gefördert. Dieses umfasst in einer im Wesentlichen kreisförmigen Anordnung eine Eingangsmessstation 422, eine erste Beschichtungsmaschine 100A zur Erzeugung der Haftschicht auf beiden Seiten, eine nachgeschaltete Kontrolleinheit 424 zur Kontrolle der Schichteigenschaften der Haftschicht, eine nachgeschaltete zweite Beschichtungseinheit 100B zur Erzeugung der Verschleißschicht auf beiden Seiten der Bremsscheibe sowie eine nachgeschaltete Kontrollstation 426 zur Kontrolle der Qualität der Verschleißschicht. Der Transfer zu diesen einzelnen Einheiten und der fertig bearbeiteten oder geprüften Bremsscheiben von diesen Einheiten wird über eine zentrale Robotereinheit 440 erreicht, deren Arbeitsbereich bis zu den Be- und Entladestationen der beiden Beschichtungsmaschinen sowie den entsprechenden Stationen der Kontrollstationen reicht.

Nach Fertigstellung der beiden Einzelschichten der Funktionsbeschichtung haben sich die fertig beschichteten Bremsscheiben aufgeheizt, typische Temperaturen können im Bereich von bis zu 200 °C oder darüber liegen. Weiterhin ist in der Regel die freie Oberfläche der Verschleißschicht noch relativ rau bzw. rillig, weil sie durch die freien Rücken von Laserauftragsschweißraupen gebildet wird. Zudem können die Schichtdicken auf den beiden Seiten unterschiedlich sein und/oder die Gesamtdicke kann noch zu groß sein. Zur Beseitigung dieser Mängel ist in der Fertigungsanlage eine Schleifstation 460 vorgesehen.

Um zu erreichen, dass die nachgeschaltete Schleifoperation zu innerhalb der Toleranzen liegenden fertigen beschichteten Bremsscheiben führt, ist zwischen die Beschichtungsstationen und die Schleifstation eine Kühlstrecke 470 geschaltet, in der die nach dem Laserbeschichten noch warmen Bremsscheiben bis etwa auf Raumtemperatur abkühlen können. Die Kühlstrecke dient auch als Puffer zum Ausgleich möglicher Unterschiede der Arbeitsgeschwindigkeiten zwischen dem Beschichtungssystem und der Schleifmaschine.

Die Schleifmaschine kann ähnlich wie die Beschichtungsmaschine eine bewegliche Spindelträgereinheit mit zwei oder mehr Werkstückspindeln aufweisen, deren zugeordnete Spindelantriebe nicht mit der Spindelträgereinheit mitbewegt werden, sondern gestellfest montiert sind. Abhängig von der Art des Schleifprozesses (einseitiges Schleifen oder synchrones Schleifen auf beiden Seiten) kann eine Wendestation vorgesehen sein oder nicht. Im Beispielsfall werden beide Oberflächen gleichzeitig mithilfe einer Variante des Doppelseitenplanschleifens geschliffen, so dass eine Wendestation entfallen kann.

Bei Bedarf können mehrstufige Schleifprozesse realisiert werden, z.B. ein zweistufiger Schleifprozess mit Vorschleifen und Feinschleifen. Diese Operationen können ggf. in einer einzigen Bearbeitungsmaschine integriert sein. Es ist auch möglich, für das Vorschleifen und das nachfolgende Feinschleifen zwei separate Bearbeitungsmaschinen bereitzustellen.

Nach Abschluss der Schleifoperation bzw. der Schleifoperationen werden die Bremsscheiben in eine Waschstation 480 gefördert, die sie in Richtung einer Nachmessstation 490 verlassen. Die komplette Fertigungsanlage wird über eine zentrale Steuereinheit 405 gesteuert. So können Taktzeiten der einzelnen Bearbeitungsstationen so aufeinander abgestimmt werden, dass ein kontinuierlicher Fertigungsprozess mit hoher Stückleistung realisiert werden kann.

Es versteht sich, dass Fig. 3 nur eine mögliche Variante für den Aufbau einer Fertigungsanlage beispielhaft darstellt. Andere Konfigurationen sind möglich. Beispielsweise könnten die Komponenten je nach Platzangebot anders zusammengestellt sein, z.B. in einer U-Anordnung, einer I-Anordnung oder einer O-Anordnung. Bearbeitungsmaschinen und andere Stationen können entlang einer Hauptförderstrecke an deren Seiten angeordnet sein und durch Querförderer bedient werden.

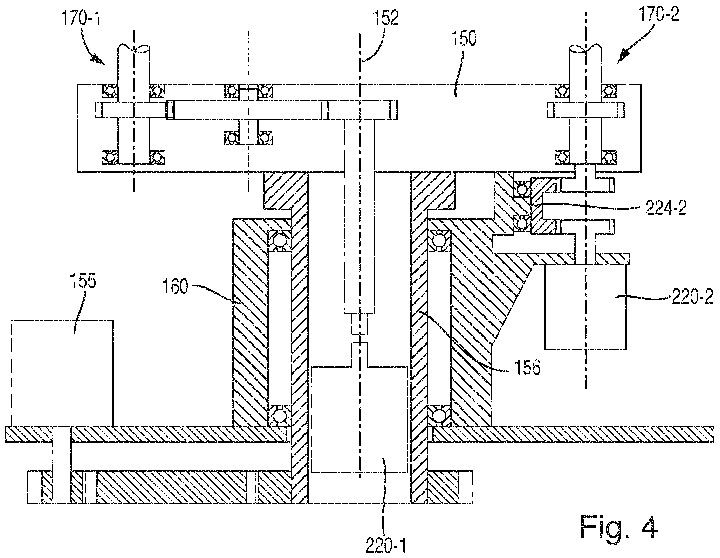

Auch bei dem Aufbau und der Funktion der Bearbeitungsmaschine gibt es im Rahmen der hier offenbarten Erfindung zahlreiche alternative Möglichkeiten der Realisierung. Die Fig. 4, 5 und 6 zeigen beispielhaft verschiedene Alternativen. Aus Gründen der Vergleichbarkeit sind für gleiche oder einander entsprechende Merkmale und Komponenten die gleichen Bezugszeichen verwendet wie beim ersten Ausführungsbeispiel. Das zugehörige Transportsystem weist in jedem Fall eine Spindelträgereinheit in Form eines Rundtisches 150 mit vertikaler Rundtischachse 152 auf.

In Fig. 4 sind die Schnittebenen links und rechts der zentrischen Rundtischachse 152 um 90° gegeneinander versetzt, d.h. die Darstellung zeigt zwei um 90° zueinander gedrehte Schnittebenen.

Bei der ersten alternativen Ausführungsform in Fig. 4 ist zentrisch am Maschinengestell 160 ein innen hohler Träger 156 um die vertikale Rundtischachse 152 drehbar gelagert. Dieser trägt die Platte des Rundtischs 150, also die Spindelträgereinheit, und wird über den Rundtischantrieb 155 angetrieben, der über Zahnräder am unteren Ende des Elements 155 angreift. Innerhalb des hohlen Trägers 155 ist der erste Spindelantrieb 220-1 angeordnet, dessen Abtrieb koaxial zur Rundtischachse liegt und mit einem Zahnrad gekoppelt ist, welches auf Höhe der Rundtischplatte liegt.

Links ist eine Werkstückspindel 170-1 gezeigt, die einen Zahnkranz trägt, der über einen zwischengeschalteten größeren Zahnkranz drehmomentübertragend mit dem zentralen Zahnrad gekoppelt ist. Beim realen Rundtisch findet sich diametral gegenüberliegend die gleiche Anordnung, so dass zwei einander diametral gegenüberliegende Werkstückspindeln gemeinsam durch den ersten Spindelantrieb 220-1 angetrieben werden und ständig mit diesem in Antriebsverbindung stehen.

Die um 90° umfangsversetzten Werkstückspindeln (rechte Teilfigur) werden über den zweiten Spindelantrieb 220-2 angetrieben. Dessen Abtriebszahnrad kämmt mit dem unteren Zahnrad einer Hohlwelle 224-2, die konzentrisch zur Rundtischachse 152 angeordnet ist und in axialem Abstand zum unteren Zahnkranz einen oberen Zahnkranz aufweist, welcher mit einem Zahnkranz kämmt, der am unteren Ende der Werkstückspindeleinheit 170-2 befestigt ist. Wird der Spindelmotor gedreht, so rotiert die Hohlwelle um die Rundtischachse und treibt dadurch die Drehung der gekoppelten Werkstückspindeln an.

Bei dieser Lösung ist nur an einem Antriebsstrang (vom zweiten Spindelantrieb) eine zum Rundtisch koaxiale Hohlwelle 224-2 vorgesehen.

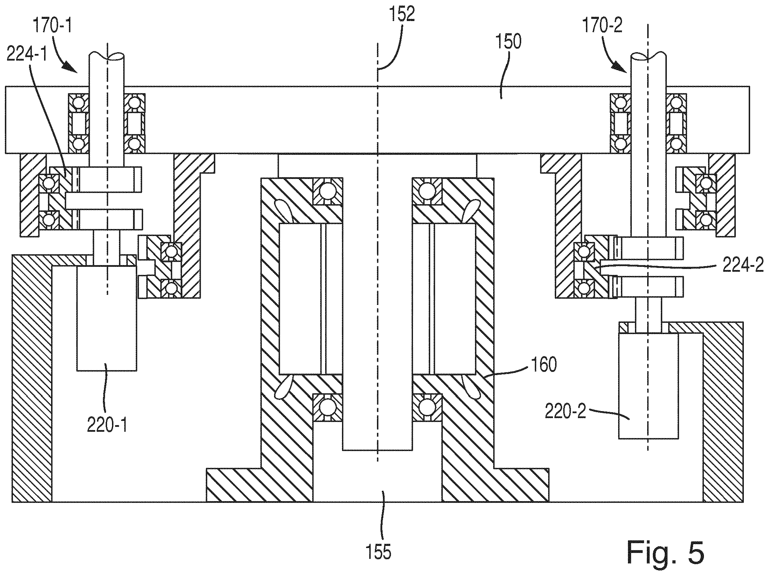

In Fig. 5 ist eine zweite alternative Konstruktionsmöglichkeit des Antriebssystems dargestellt. Der Rundtischantrieb 155 ist hier zentrisch zur Rundtischdrehachse angeordnet, es kann sich beispielsweise um einen zentralen Torquemotor handeln. Die Rundtischplatte ist auf einer Trägerwelle montiert, die am Maschinengestell 160 drehbar gelagert ist. Die linke Teilfigur zeigt den ersten Spindelantrieb 220-1, der mit den Werkstückspindeln an den Positionen P1 und P3 gekoppelt ist. Am oberen Ende der Abtriebswelle sitzt ein Antriebszahnrad, welches mit einem unteren Zahnkranz einer ersten Hohlwelle 224-1 kämmt, die mit nach innen gerichteten Verzahnungen an der Unterseite des Rundtisches 150 um die Rotationsachse des Rundtisches drehbar gelagert ist. Die Hohlwelle hat axial versetzt einen oberen Zahnkranz, dessen nach innen gerichtete Verzahnung mit einem Zahnrad am unteren Ende der anzutreibenden Werkstückspindel 170-1 kämmt.

Die rechte Teilfigur zeigt den Antriebsstrang, der vom zweiten Spindelmotor 220-2 ausgeht und die Spindeln an den Positionen P2 und P4 antreibt. Hier umfasst die Drehmomentübertragungseinrichtung eine zweite Hohlwelle 224-2, die an einem an der Unterseite des Rundtisches angebrachten Lagerelement koaxial zur Rundtischachse 152 drehbar gelagert ist. Die nach außen gerichtete obere Verzahnung der zweiten Hohlwelle kämmt mit einem Zahnrad am unteren Ende der zugehörigen Werkstückspindel 170-2. Diese Lösung nutzt somit zwei jeweils koaxial zur Rundtischachse 152 drehbare Hohlwellen 224-1, 224-2, die jeweils Verzahnungen auf unterschiedlichen axialen Niveaus haben.

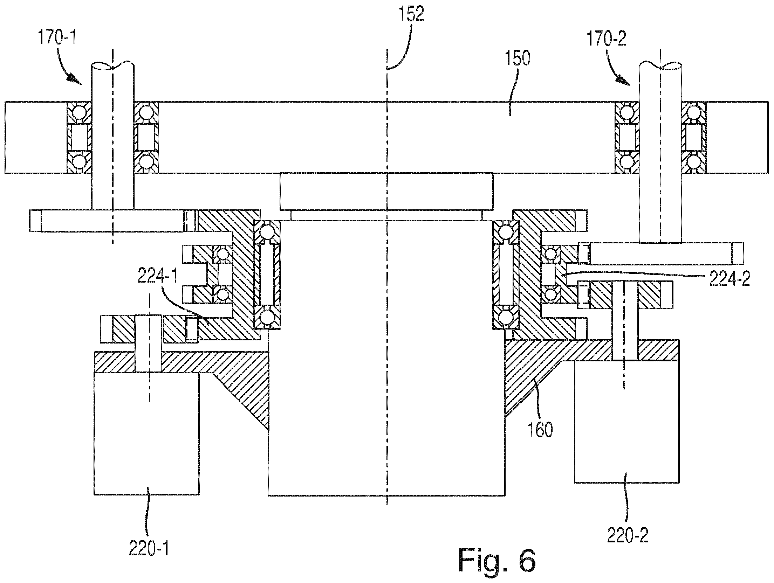

In Fig. 6 ist eine dritte Alternative schematisch dargestellt, wobei jeweils die Teilfiguren links und rechts der Rundtischachse um 90° versetzte Schnittebenen darstellen. Der Rundtischabtrieb ist innerhalb des zentralen Bereichs des Maschinengestells 160 zum Beispiel im Bereich der Rundtischachse montiert. Der links dargestellte erste Spindelmotor 220-1 für die Positionen P1 und P3 der Werkzeugspindeln treibt mit seinem Abtriebszahnrad eine erste Hohlwelle 224-1 an, die mit nach außen gerichteter Verzahnung koaxial um die Rundtischachse drehbar am Maschinengestell gelagert ist. Der obere Zahnkranz der Hohlwelle kämmt mit dem Antriebszahnrad der Werkstückspindel 170-2 an Position P1.

Beim rechts dargestellten zweiten Antriebsstrang vom zweiten Spindelantrieb 220-2 zu den Werkstückspindeln an Position P2 und P4 umfasst die Drehmomentübertragungseinrichtung eine zweite Hohlwelle 224-2, die relativ zur ersten Hohlwelle 224-1 und relativ zum Maschinengestell 160 koaxial zur Rundtischachse drehbar gelagert ist. Diese Hohlwelle nimmt die Drehbewegung des Abtriebszahnrads des zweiten Spindelantriebs auf und überträgt diese über seinen oberen Zahnkranz auf das eingangsseitige Antriebszahnrad der Werkstückspindel.

Ein Fachmann kann diese Varianten oder Spielarten davon je nach Umgebungsbedingungen und Bedarf des Antriebs nutzen, um an einer drehbeweglichen Spindelträgereinheit (hier Rundtisch) dort montierte Werkstückspindeln mit gestellfest montierten Spindelantrieben anzutreiben. Während die Drehmomentübertragung der Beispiele überwiegend über Zahnräder erfolgt, können auch andere Antriebselemente, beispielsweise Riemen oder dergleichen, an manchen Stellen im Antriebsstrang genutzt werden.

## Patentansprüche

1. Bearbeitungsmaschine (100) zur Verwendung bei der Herstellung einer beschichteten Bremsscheibe (BS), die einen Grundkörper aufweist, der in Bezug auf eine Rotationsachse (RA) der Bremsscheibe eine rotationssymmetrische Massenverteilung aufweist und eine zentralen Nabenabschnitt (NA) sowie einen den Nabenabschnitt umschließenden kreisringförmigen Bremsabschnitt (BA) umfasst, wobei der Bremsabschnitt zwei axial gegenüberliegende Oberflächen aufweist, die jeweils eine bezogen auf die Rotationsachse rotationssymmetrische Funktionsschicht tragen, deren freie Oberfläche als Reibfläche der Bremsscheibe ausgebildet ist, wobei die Bearbeitungsmaschine umfasst:
eine Maschinenbasis (160);
ein Transportsystem mit einer relativ zur Maschinenbasis beweglichen Spindelträgereinheit (150), die wenigstens eine Werkstückspindel (170) trägt, welche relativ zu der Spindelträgereinheit (150) um eine Spindelrotationsachse (172) drehbar gelagert ist und eine Werkstückhaltevorrichtung (173) aufweist, die derart ausgebildet ist, dass ein an der Werkstückhaltevorrichtung (173) aufgenommener Grundkörper bei Drehung der Werkstückspindel (170) im Wesentlichen um die zur Spindelrotationsachse (172) koaxiale Rotationsachse (RA) rotierbar ist;
mehrere entlang einer Transportstrecke angeordnete und durch die Werkstückspindel (170) anfahrbare Arbeitsstationen (ST1 bis ST4), die eine Ladestation (110, ST1) und wenigstens eine Bearbeitungsstation (120-1, 120-2) mit wenigstens einer Bearbeitungseinheit (125) zum Bearbeiten wenigstens einer Seite des Bremsabschnitts umfassen;
ein Antriebssystem (200) mit wenigstens einem Spindelantrieb (220) zur Erzeugung von Drehbewegungen der Werkstückspindel (170) um die Spindelrotationsachse in Reaktion auf Steuersignale einer Steuereinheit (190),
**dadurch gekennzeichnet, dass**
das Antriebssystem (200) und die Steuereinheit (190) derart konfiguriert sind, dass eine Werkstückspindel (170) nach Befestigen einer Bremsscheibe an der Werkstückhaltevorrichtung in der Ladestation (110) vor Erreichen der Bearbeitungsstation mittels eines zugeordneten Spindelantriebs derart in eine Rotation mit zunehmender Drehzahl versetzbar ist, dass das an der Werkstückspindel aufgenommene Werkstück mit einer Eintrittsdrehzahl rotierend in die Bearbeitungsposition bewegbar ist.

2. Bearbeitungsmaschine nach Anspruch 1, **dadurch gekennzeichnet, dass** das Antriebssystem (200) und die Steuereinheit (190) derart konfiguriert sind, dass eine Beschleunigung einer Drehbewegung der Werkstückspindel unmittelbar nach Befestigen des Werkstücks an der Werkstückhaltevorrichtung beginnt, bevor die Spindelträgereinheit in Bewegung gesetzt wird, um die Werkstückspindel zur Bearbeitungsstation zu transportieren.

3. Bearbeitungsmaschine nach Anspruch 1 oder 2, **dadurch gekennzeichnet, dass** das Antriebssystem (200) und die Steuereinheit (190) derart konfiguriert sind, dass die Werkstückspindel bis auf eine für eine Bearbeitungsoperation in der Bearbeitungsstation vorgesehene Arbeitsdrehzahl von mehr als 100 U/min, insbesondere auf eine Arbeitsdrehzahl im Bereich von 150U/min bis 600 U/min beschleunigt wird, wobei die Eintrittsdrehzahl im Wesentlichen der für die Bearbeitungsoperation gewünschten Arbeitsdrehzahl entspricht, so dass die Bearbeitungsoperation ohne Verzögerung beginnen kann, sobald das Werkstück sich in der Bearbeitungsposition befindet, oder wobei die Eintrittsdrehzahl geringer als die Arbeitsdrehzahl ist, so dass noch eine weitere, kurze Beschleunigungsphase erforderlich ist.

4. Bearbeitungsmaschine nach Anspruch 1, 2 oder 3, **dadurch gekennzeichnet, dass** das Antriebssystem (200) wenigstens einen gestellfest montierten Spindelantrieb (220) und eine Drehmomentübertragungseinrichtung (230) zum Übertragen von Drehmomenten von dem Spindelantrieb zu wenigstens einer zugeordnete Werkstückspindel (170) aufweist, wobei vorzugsweise die Spindelträgereinheit (150) mehrere Werkstückspindeln trägt, insbesondere drei oder vier Werkstückspindeln (170-1 bis 170-4), und für jede der Werkstückspindeln eine zugeordneter gestellfest montierter Spindeldrehanrieb (220-1, 220-2) vorgesehen ist.

5. Bearbeitungsmaschine nach einem der vorhergehenden Ansprüche, **dadurch gekennzeichnet, dass** das Antriebssystem derart konfiguriert ist, dass jede Werkstückspindel (170) permanent, insbesondere auch während einer Bewegung der Spindelträgereinheit (150) in Antriebsverbindung mit einem zugeordneten Spindelantrieb (220) steht.

6. Bearbeitungsmaschine nach einem der vorhergehenden Ansprüche, **dadurch gekennzeichnet, dass** das Transportsystem als Spindelträgereinheit (150) einen Rundtisch (150) aufweist, der mittels eines Rundtischantriebs (155) um eine, vorzugsweise vertikale, Rundtischachse (152) rotierbar ist und dass mehrere Werkstückspindeln (170) am Rundtisch derart angeordnet sind, dass sie auf einer kreisförmigen oder kreisbogenförmigen Transportstrecke zwischen Arbeitsstationen (ST1 bis ST4) der Bearbeitungsmaschine transportierbar sind, wobei vorzugsweise Werkstückspindeln (170) am Rundtisch (150) derart verteilt sind, dass es Paare von Werkstückspindeln gibt, wobei jeweils für zwei Werkstückspindeln (170-1, 170-3; 170-2, 170-4) eines Paares ein gemeinsamer Spindelantrieb (220-1; 220-2) vorgesehen ist, wobei vorzugsweise die Werkstückspindeln eines Paares einander diametral zur Rundtischachse (152) gegenüberliegen und/oder wobei in wenigstens einer Drehmomentübertragungseinrichtung zwischen einem Spindelantrieb (220) und mehreren damit antriebsgekoppelten Werkstückspindeln (170) eine koaxial mit der Rundtischachse (152) drehbare Hohlwelle (224) integriert ist, die axial gestaffelt ein Antriebselement und ein Abtriebselement aufweist, wobei vorzugsweise zwei Antriebsstränge mit ineinander geschachtelten Hohlwellen (224-1, 224-2) mit höhenmäßig gestaffelten Antriebselementen und Abtriebselementen integriert sind.

7. Bearbeitungsmaschine nach einem der vorhergehenden Ansprüche, **dadurch gekennzeichnet, dass** die Bearbeitungsmaschine als Beschichtungsmaschine (100) konfiguriert ist, wobei mindestens eine Bearbeitungsstation als eine Beschichtungsstation mit mindestens einer Beschichtungseinheit konfiguriert ist, wobei die Beschichtungsmaschine (100) vorzugsweise wenigstens zwei, insbesondere genau zwei, gesondert voneinander angeordnete Arbeitsstationen aufweist, die als Beschichtungsstationen ausgelegt sind.

8. Bearbeitungsmaschine nach Anspruch 7, **dadurch gekennzeichnet, dass** die Beschichtungsmaschine (100) für eine beidseitige Beschichtung einer Bremsscheibe ausgelegt ist, vorzugsweise derart, dass eine erste Beschichtungsoperation zur Beschichtung einer ersten Seite und eine zweite Beschichtungsoperation zur Beschichtung einer der ersten Seite axial gegenüberliegenden zweiten Seite des Bremsabschnitts zeitlich nacheinander durchführbar sind und/oder **dadurch gekennzeichnet, dass** die Beschichtungsmaschine (100) mehrere entlang der Transportstrecke des Transportsystems angeordnete Arbeitsstationen (ST1 bis ST4) aufweist, die in dieser Reihenfolge eine Ladestation (110), eine erste Beschichtungsstation (120-1) mit wenigstens einer Beschichtungseinheit zum Beschichten einer ersten Seite einer Bremsscheibe, eine Wendestation (130) zum Wenden einer an einer Werkstückspindel aufgenommenen Bremsscheibe und wenigstens eine zweite Beschichtungsstation (120-2) zum Beschichten einer zweiten Seite der Bremsscheibe sowie eine Entladestation aufweist, wobei vorzugsweise die Ladestation auch als Entladestation fungiert.

9. Bearbeitungsmaschine nach Anspruch 7, oder 8, **dadurch gekennzeichnet, dass** eine Beschichtungseinheit als Laserauftragsschweißvorrichtung ausgebildet ist, die im Betrieb ein Metallpulver in Richtung der zu beschichtenden Oberfläche abstrahlt und gleichzeitig einen Laserstrahl führt, der vorzugsweise so fokussiert wird, dass das Metallpulver vor Erreichen der Werkstückoberfläche aufgeschmolzen und im aufgeschmolzenen Zustand auf die Werkstückoberfläche abgeschieden wird, um die Funktionsschicht zu bilden und/oder dass eine Beschichtungseinheit vertikal sowie horizontal antriebsgesteuert verfahrbar ist und/oder in jeder Beschichtungsoperation eine Oberfläche an der nach oben gerichteten Seite des Werkstücks beschichtbar ist.

10. Verfahren zur Herstellung einer beschichteten Bremsscheibe (BS), die einen Grundkörper aufweist, der in Bezug auf eine Rotationsachse (RA) der Bremsscheibe eine rotationssymmetrische Massenverteilung aufweist und eine zentralen Nabenabschnitt (NA) sowie einen den Nabenabschnitt umschließenden kreisringförmigen Bremsabschnitt (BA) umfasst, wobei der Bremsabschnitt (BA) zwei axial gegenüberliegende Oberflächen aufweist, die jeweils eine bezogen auf die Rotationsachse rotationssymmetrische Funktionsschicht tragen, deren freie Oberfläche als Reibfläche der Bremsscheibe ausgebildet ist,
wobei das Verfahren die folgenden Schritte umfasst:
Bereitstellen eines Transportsystems mit einer beweglichen Spindelträgereinheit (150), die wenigstens eine Werkstückspindel (170) trägt, welche relativ zu der Spindelträgereinheit um eine Spindelrotationsachse (172) drehbar gelagert ist und eine Werkstückhaltevorrichtung (173) aufweist, die derart ausgebildet ist, dass ein an der Werkstückhaltevorrichtung aufgenommener Grundkörper einer Bremsscheibe bei Drehung der Werkstückspindel im Wesentlichen um die Rotationsachse (RA) des Grundkörpers rotiert wird;
Befestigen des Grundkörpers an der Werkstückhaltevorrichtung (170);
Bewegen der Spindelträgereinheit (150) des Transportsystems zum Transportieren des an der Werkstückspindel aufgenommenen Grundkörpers in eine Bearbeitungsposition einer Bearbeitungsstation (120);
Bearbeiten des Bremsabschnitts (BA) an wenigstens einer der Seiten, wobei das Werkstück durch Drehung der Werkstückspindel (170) mit einer Arbeitsdrehzahl um die Spindelrotationsachse rotiert wird,
**dadurch gekennzeichnet, dass**
dass die Werkstückspindel (170) nach Befestigen des Werkstücks an der Werkstückhaltevorrichtung (173) vor Erreichen der Bearbeitungsposition in eine Rotation mit zunehmender Drehzahl versetzt wird und das an der Werkstückspindel aufgenommene Werkstück bereits mit einer Eintrittsdrehzahl rotierend in die Beschichtungsposition bewegt wird.

11. Verfahren nach Anspruch 10, **dadurch gekennzeichnet, dass** die Beschleunigung der Drehbewegung unmittelbar nach Befestigen des Werkstücks an der Werkstückhaltevorrichtung beginnt, bevor die Spindelträgereinheit in Bewegung gesetzt wird, um die Werkstückspindel zur Bearbeitungsstation zu transportieren.

12. Verfahren nach Anspruch 10 oder 11, **dadurch gekennzeichnet, dass** die Werkstückspindel bis auf eine für eine Bearbeitungsoperation in der Bearbeitungsstation vorgesehene Arbeitsdrehzahl von mehr als 100 U/min, insbesondere auf eine Arbeitsdrehzahl im Bereich von 150U/min bis 600 U/min beschleunigt wird, wobei die Eintrittsdrehzahl im Wesentlichen der für die Bearbeitungsoperation gewünschten Arbeitsdrehzahl entspricht, so dass die Bearbeitungsoperation ohne Verzögerung beginnen kann, sobald das Werkstück sich in der Bearbeitungsposition befindet, oder wobei die Eintrittsdrehzahl geringer als die Arbeitsdrehzahl ist, so dass noch eine weitere, kurze Beschleunigungsphase erforderlich ist.

13. Verfahren nach einem der Ansprüche 10 bis 12, **dadurch gekennzeichnet, dass** die Bearbeitung das Erzeugen einer zur Rotationsachse rotationssymmetrischen Funktionsbeschichtung an wenigstens einer Seite des Bremsabschnitts in einer Beschichtungsoperation umfasst, wobei der Grundkörper durch Drehung der Werkstückspindel mit einer Arbeitsdrehzahl um die Spindelrotationsachse rotiert wird und Beschichtungsmaterial von einer Beschichtungseinheit auf die zu beschichtende Oberfläche aufgebracht wird, wobei vorzugsweise das Werkstück eine erste Seite und in einer Axialrichtung gegenüberliegend eine zweite Seite aufweist und in einer ersten Beschichtungsoperation auf einen Oberflächenbereich der ersten Seite eine erste rotationssymmetrische Funktionsschicht und in einer zweiten Beschichtungsoperation auf einen Oberflächenbereich der zweiten Seite eine zweite rotationssymmetrische Funktionsschicht aufgebracht wird, wobei vorzugsweise die erste und die zweite Beschichtungsoperation zeitlich nacheinander durchgeführt werden und/oder wobei das Werkstück für die erste Beschichtungsoperation in einer ersten Orientierung an der Werkstückaufnahmevorrichtung befestigt wird, nach der ersten Beschichtungsoperation von der Werkstückaufnahme gelöst, in einer Wendeoperation von der ersten Orientierung in eine zweite Orientierung gewendet und in der zweiten Orientierung an der Werkstückaufnahmevorrichtung befestigt wird.

14. Fertigungsanlage zur Herstellung beschichteter Bremsscheiben (BS), die einen Grundkörper aufweisen, der in Bezug auf eine Rotationsachse (RA) der Bremsscheibe eine rotationssymmetrische Massenverteilung aufweist und eine zentralen Nabenabschnitt (NA) sowie einen den Nabenabschnitt umschließenden kreisringförmigen Bremsabschnitt (BA) umfassen, wobei der Bremsabschnitt zwei axial gegenüberliegende Oberflächen aufweist, die jeweils eine bezogen auf die Rotationsachse rotationssymmetrische Funktionsschicht tragen, deren freie Oberfläche als Reibfläche der Bremsscheibe ausgebildet ist,
**dadurch gekennzeichnet, dass**
die Fertigungsanlage wenigstens eine Bearbeitungsmaschine (100A, 100B) nach einem der Ansprüche 1 bis 9 aufweist.

15. Fertigungsanlage nach Anspruch 14, **gekennzeichnet durch** wenigstens eines der folgenden Merkmale:
(i) die Fertigungsanlage weist eine oder mehrere der Bearbeitungsmaschinen auf, die als Beschichtungsmaschine (100A, 100B) zur beidseitigen Beschichtung einer Bremsscheibe konfiguriert sind, wobei vorzugsweise eine Beschichtungsmaschine wenigstens eine Laserauftragsschweißeinheit aufweist, die dafür konfiguriert ist, ein Metallpulver in Richtung der zu beschichtenden Oberfläche abzustrahlen und gleichzeitig einen Laserstrahl zu führen, der in einem Fokusbereichs so fokussiert wird, dass das Metallpulver im Fokusbereich aufgeschmolzen und auf der Werkstückoberfläche abgeschieden wird, um die Funktionsschicht zu bilden;
(ii) die Fertigungsanlage weist wenigstens eine der letzten Beschichtungsmaschine nachgeschaltete Schleifmaschine (460) auf, die vorzugsweise als Bearbeitungsmaschine nach einem der Ansprüche 1 bis 9 ausgelegt ist, wobei vorzugsweise zwischen der Beschichtungsmaschine und der Schleifmaschine eine Kühlstrecke (470) zum Abkühlen beschichteter Bremsscheiben angeordnet ist.

## Claims

1. Processing machine (100) for use in the manufacture of a coated brake disc (BS) having a main body having a rotationally symmetrical mass distribution with respect to a rotational axis (RA) of the brake disc and comprising a central hub portion (NA) and an annular brake portion (BA) surrounding the hub portion, wherein the brake portion has two axially opposite surfaces, each bearing a rotationally symmetrical functional layer with respect to the rotational axis, the free surface of which is formed as the friction surface of the brake disc, wherein the processing machine comprises:
a machine base (160);
a transport system having a spindle carrier unit (150) which is movable relative to the machine base and which carries at least one workpiece spindle (170) which is rotatably mounted relative to the spindle carrier unit (150) about a spindle rotation axis (172) and has a workpiece holding device (173) which is designed in such a way that a main body received on the workpiece holding device (173) can be rotated substantially around the rotation axis (RA) coaxial with respect to the spindle rotation axis (172) when the workpiece spindle (170) is rotated;
a plurality of workstations (ST1 to ST4) arranged along a transport path and accessible by the workpiece spindle (170), comprising a loading station (110, ST1) and at least one processing station (120-1, 120-2) with at least one processing unit (125) for processing at least one side of the brake portion;
a drive system (200) with at least one spindle drive (220) for generating rotary movements of the workpiece spindle (170) around the spindle rotation axis in response to control signals from a control unit (190),
**characterized in that**
the drive system (200) and the control unit (190) are configured in such a way that, after fastening a brake disc to the workpiece holding device in the loading station (110) before the processing station is reached, a workpiece spindle (170) can be set in rotation with increasing speed by means of an assigned spindle drive in such a way that the workpiece received on the workpiece spindle can be moved rotationally into the processing position at an entry speed.

2. Processing machine according to Claim 1, **characterized in that** the drive system (200) and the control unit (190) are configured in such a way that an acceleration of a rotational movement of the workpiece spindle begins immediately after fastening of the workpiece to the workpiece holding device, before the spindle carrier unit is set in motion to transport the workpiece spindle to the processing station.

3. Processing machine according to Claim 1 or 2**, characterized in that** the drive system (200) and the control unit (190) are configured in such a way that the workpiece spindle is accelerated up to a working speed of more than 100 rpm provided for a processing operation in the processing station, in particular up to a working speed in the range from 150 rpm to 600 rpm, wherein the entry speed corresponds substantially to the working speed desired for the processing operation, with the result that the processing operation can begin without delay as soon as the workpiece is situated in the processing position, or wherein the entry speed is lower than the working speed, with the result that a further, short acceleration phase is required.

4. Processing machine according to Claim 1, 2 or 3, **characterized in that** that the drive system (200) has at least one spindle drive (220), mounted fixedly on the frame, and a torque transmission device (230) for transferring torques from the spindle drive to at least one associated workpiece spindle (170), wherein the spindle carrier unit (150) preferably carries a plurality of workpiece spindles, in particular three or four workpiece spindles (170-1 to 170-4), and an assigned spindle rotary drive (220-1, 220-2), mounted fixedly on the frame, is provided for each of the workpiece spindles.

5. Processing machine according to one of the preceding claims, **characterized in that** the drive system is configured in such a way that each workpiece spindle (170) is drive-connected to an associated spindle drive (220) permanently, in particular also during a movement of the spindle carrier unit (150).

6. Processing machine according to one of the preceding claims, **characterized in that** the transport system has, as a spindle carrier unit (150), a rotary table (150) which can be rotated by means of a rotary table drive (155) about a**,** preferably vertical, rotary table axis (152), and **in that** a plurality of workpiece spindles (170) are arranged on the rotary table in such a way that they can be transported on a circular or arcuate transport path between workstations (ST1 to ST4) of the processing machine, wherein workpiece spindles (170) are preferably distributed on the rotary table (150) in such a way that there are pairs of workpiece spindles, wherein a common spindle drive (220-1; 220-2) is provided in each case for two workpiece spindles (170-1, 170-3; 170-2, 170-4) of a pair, wherein the workpiece spindles of a pair preferably lie opposite each other diametrically with respect to the rotary table axis (152), and/or wherein a hollow shaft (224) rotatable coaxially with the rotary table axis (152) is integrated into at least one torque transmission device between a spindle drive (220) and a plurality of workpiece spindles (170) drive-coupled thereto, which has a drive element and an output element in an axially staggered manner, wherein two drive trains with nested hollow shafts (224-1, 224-2) with height-staggered drive elements and output elements are preferably integrated.

7. Processing machine according to one of the preceding claims, **characterized in that** the processing machine is configured as a coating machine (100), wherein at least one processing station is configured as a coating station with at least one coating unit, wherein the coating machine (100) preferably has at least two, in particular exactly two, separately arranged workstations which are designed as coating stations.

8. Processing machine according to Claim 7, **characterized in that** the coating machine (100) is designed for two-sided coating of a brake disc, preferably in such a way that a first coating operation for coating a first side and a second coating operation for coating a second side of the brake portion lying axially opposite the first side can be carried out successively in time, and/or **characterized in that** the coating machine (100) has a plurality of workstations (ST1 to ST4) arranged along the transport path of the transport system, which in this order comprise a loading station (110), a first coating station (120-1) with at least one coating unit for coating a first side of a brake disc, a turning station (130) for turning a brake disc received on a workpiece spindle, and at least one second coating station (120-2) for coating a second side of the brake disc and an unloading station, wherein the loading station preferably also acts as an unloading station.

9. Processing machine according to Claim 7 or 8, **characterized in that** a coating unit is designed as a laser deposit welding device which, during operation, emits a metal powder in the direction of the surface to be coated and at the same time guides a laser beam which is preferably focused in such a way that the metal powder is melted before reaching the workpiece surface and is deposited on the workpiece surface in the melted state in order to form the functional layer, and/or **in that** a coating unit can be moved in a manner which is drive-controlled vertically and horizontally, and/or a surface on the upwardly directed side of the workpiece can be coated in each coating operation.

10. Method for producing a coated brake disc (BS) comprising a main body having a rotationally symmetrical mass distribution with respect to a rotational axis (RA) of the brake disc and comprising a central hub portion (NA) and an annular brake portion (BA) surrounding the hub portion, wherein the brake portion (BA) has two axially opposite surfaces, each bearing a rotationally symmetrical functional layer with respect to the rotational axis, the free surface of which is formed as the friction surface of the brake disc,
wherein the method comprises the following steps:
providing a transport system with a movable spindle carrier unit (150) which carries at least one workpiece spindle (170) which is rotatably mounted relative to the spindle carrier unit about a spindle rotation axis (172) and has a workpiece holding device (173) which is designed in such a way that a main body of a brake disc which is received on the workpiece holding device is rotated substantially around the rotation axis (RA) of the main body when the workpiece spindle is rotated;
fastening the main body to the workpiece holding device (170) ;
moving the spindle carrier unit (150) of the transport system for transporting the main body received on the workpiece spindle into a processing position of a processing station (120);
processing the brake portion (BA) on at least one of the sides, wherein the workpiece is rotated by rotation of the workpiece spindle (170) at a working speed around the spindle rotation axis,
**characterized in that**,
after fastening the workpiece to the workpiece holding device (173) before the processing position is reached, the workpiece spindle (170) is set in rotation with increasing speed and the workpiece received on the workpiece spindle is moved rotationally into the coating position at an entry speed.

11. Method according to Claim 10, **characterized in that** the acceleration of the rotational movement begins immediately after fastening the workpiece to the workpiece holding device, before the spindle carrier unit is set in motion in order to transport the workpiece spindle to the processing station.

12. Method according to Claim 10 or 11, **characterized in that** the workpiece spindle is accelerated up to a working speed of more than 100 rpm provided for a processing operation in the processing station, in particular to a working speed in the range from 150 rpm to 600 rpm, wherein the entry speed corresponds substantially to the working speed desired for the processing operation, with the result that the processing operation can begin without delay as soon as the workpiece is situated in the processing position, or wherein the entry speed is lower than the working speed, with the result that a further, short acceleration phase is required.

13. Method according to one of Claims 10 to 12, **characterized in that** the processing comprises the production of a rotationally symmetrical functional coating with respect to the rotational axis on at least one side of the brake portion in a coating operation, wherein the main body is rotated by rotation of the workpiece spindle at a working speed around the spindle rotation axis and coating material is applied by a coating unit to the surface to be coated, wherein the workpiece preferably has a first side and a second side lying opposite in an axial direction, and, in a first coating operation, a first rotationally symmetrical functional layer is applied to a surface region of the first side and, in a second coating operation, a second rotationally symmetrical functional layer is applied to a surface region of the second side, wherein the first and the second coating operations are preferably carried out sequentially, and/or wherein the workpiece is attached in a first orientation to the workpiece receiving device for the first coating operation, is released from the workpiece receiver after the first coating operation, is turned from the first orientation into a second orientation in a reversing operation, and is attached to the workpiece receiving device in the second orientation.

14. Production facility for the production of coated brake discs (BS) comprising a main body having a rotationally symmetrical mass distribution with respect to a rotational axis (RA) of the brake disc and comprising a central hub portion (NA) and an annular brake portion (BA) surrounding the hub portion, wherein the brake portion has two axially opposite surfaces which each bear a rotationally symmetrical functional layer with respect to the rotational axis, the free surface of which is formed as the friction surface of the brake disc,
**characterized in that**
the production facility comprises at least one processing machine (100A, 100B) according to one of Claims 1 to 9.

15. Production facility according to Claim 14, **characterized by** at least one of the following features:
(i) the production facility comprises one or more of the processing machines configured as a coating machine (100A, 100B) for two-sided coating of a brake disc, wherein a coating machine preferably has at least one laser deposit welding unit which is configured to emit a metal powder in the direction of the surface to be coated and at the same time to guide a laser beam which is focused in a focus area in such a way that the metal powder is melted in the focus area and is deposited on the workpiece surface to form the functional layer;
(ii) the production facility has at least one grinding machine (460) downstream of the last coating machine, which is preferably designed as a processing machine according to one of Claims 1 to 9**,** wherein a cooling section (470) for cooling coated brake discs is preferably arranged between the coating machine and the grinding machine.

## Revendications

1. Machine de traitement (100) pour l'utilisation lors de la fabrication d'un disque de frein (BS) revêtu, qui présente un corps de base qui présente une distribution de masse à symétrie de révolution par rapport à un axe de rotation (RA) du disque de frein et comprend une partie moyeu (NA) centrale ainsi qu'une partie de freinage (BA) de forme annulaire circulaire entourant la partie moyeu, la partie de freinage présentant deux surfaces axialement opposées qui supportent respectivement une couche fonctionnelle à symétrie de révolution par rapport à l'axe de rotation, dont la surface libre est réalisée comme surface de friction du disque de frein, la machine de traitement comprenant :
une base de machine (160) ;
un système de transport comportant une unité de support de broche (150) mobile par rapport à la base de machine, laquelle unité supporte au moins une broche porte-pièce (170), laquelle est montée rotative autour d'un axe de rotation de broche (172) par rapport à l'unité de support de broche (150) et présente un dispositif de retenue de pièce (173) qui est réalisé de telle sorte qu'un corps de base logé sur dispositif de retenue de pièce (173) peut être entraîné en rotation lors de la rotation de la broche porte-pièce (170) sensiblement autour de l'axe de rotation (RA) coaxial à l'axe de rotation de broche (172) ;
plusieurs postes de travail (ST1 à ST4) disposés le long d'une voie de transport et pouvant être atteints par la broche porte-pièce (170), lesquels comprennent un poste de chargement (110, ST1) et au moins un poste de traitement (120-1, 120-2) comportant au moins une unité de traitement (125) pour le traitement d'au moins un côté de la partie de freinage ;
un système d'entraînement (200) comportant au moins un entraînement de broche (220) pour la génération de mouvements rotatifs de la broche porte-pièce (170) autour de l'axe de rotation de boche en réaction à des signaux de commande d'une unité de commande (190),
**caractérisée en ce que**
le système d'entraînement (200) et l'unité de commande (190) sont configurés de telle sorte qu'une broche porte-pièce (170), après la fixation d'un disque de frein au dispositif de retenue de pièce dans le poste de chargement (110), avant que le poste de traitement ne soit atteint, peut être mise en rotation à une vitesse de rotation croissante à l'aide d'un entraînement de broche associé, de telle sorte que la pièce logée sur la broche porte-pièce peut être déplacée de manière rotative dans la position de traitement à une vitesse de rotation d'entrée.

2. Machine de traitement selon la revendication 1, **caractérisée en ce que** le système d'entraînement (200) et l'unité de commande (190) sont configurés de telle sorte qu'une accélération d'un mouvement rotatif de la broche porte-pièce commence immédiatement après la fixation de la pièce au dispositif de retenue de pièce, avant que l'unité de support de broche ne soit mise en mouvement, afin de transporter la broche porte-pièce jusqu'au poste de traitement.

3. Machine de traitement selon la revendication 1 ou 2, **caractérisée en ce que** le système d'entraînement (200) et l'unité de commande (190) sont configurés de telle sorte que la broche porte-pièce est accélérée jusqu'à une vitesse de rotation de travail, prévue pour une opération de traitement dans le poste de traitement, de plus de 100 tr/min, en particulier jusqu'à une vitesse de rotation de travail dans la plage de 150 tr/min à 600 tr/min, la vitesse de rotation d'entrée correspondant sensiblement à la vitesse de rotation de travail souhaitée pour l'opération de traitement, de sorte que l'opération de traitement puisse commencer sans retard dès que la pièce se trouve dans la position de traitement, ou la vitesse de rotation d'entrée étant inférieure à la vitesse de rotation de travail, de sorte qu'une autre phase d'accélération courte soit encore nécessaire.

4. Machine de traitement selon la revendication 1, 2 ou 3, **caractérisée en ce que** le système d'entraînement (200) présente au moins un entraînement de broche (220) monté de manière solidaire du bâti et un dispositif de transmission de couple (230) pour la transmission de couples de l'entraînement de broche à au moins une broche porte-pièce (170) associée, l'unité de support de broche (150) supportant de préférence plusieurs broches porte-pièce, en particulier trois ou quatre broches porte-pièce (170-1 à 170-4), et un entraînement de broche (220-1, 220-2) associé monté de manière solidaire du bâti étant prévu pour chacune des broches porte-pièce.

5. Machine de traitement selon l'une des revendications précédentes, **caractérisée en ce que** le système d'entraînement est configuré de telle sorte que chaque broche porte-pièce (170) est en permanence en liaison d'entraînement avec un entraînement de broche (220) associé, en particulier également pendant un mouvement de l'unité de support de broche (150).

6. Machine de traitement selon l'une des revendications précédentes, **caractérisée en ce que** le système de transport présente, comme unité de support de broche (150), une table ronde (150) qui peut être entraînée en rotation autour d'un axe de table ronde (152) de préférence vertical à l'aide d'un entraînement de table ronde (155) et **en ce que** plusieurs broches porte-pièce (170) sont disposées sur la table ronde de telle sorte qu'elles peuvent être transportées sur une voie de transport circulaire ou en forme d'arc de cercle entre des postes de travail (ST1 à ST4) de la machine de traitement, des broches porte-pièce (170) étant de préférence distribuées sur la table ronde (150) de telle sorte qu'il y ait des paires de broches porte-pièce, une paire d'un entraînement de broche (220-1 ; 220-2) commun étant respectivement prévue pour deux broches porte-pièce (170-1, 170-3 ; 170-2, 170-4), les broches porte-pièce d'une paire étant de préférence diamétralement opposées l'une à l'autre par rapport à l'axe de table ronde (152) et/ou un arbre creux (224) rotatif coaxialement avec l'axe de table ronde (152) étant intégré dans au moins un dispositif de transmission de couple entre un entraînement de broche (220) et plusieurs broches porte-pièce (170) accouplées par entraînement à celui-ci, lequel arbre creux présente un élément d'entraînement et un élément de sortie de manière étagée axialement, deux chaînes cinématiques comportant des arbres creux (224-1, 224-2) emboîtés l'un dans l'autre et dotés d'éléments d'entraînement et d'éléments de sortie étagés en hauteur étant de préférence intégrées.

7. Machine de traitement selon l'une des revendications précédentes, **caractérisée en ce que** la machine de traitement est configurée comme machine de revêtement (100), au moins un poste de traitement étant configuré comme un poste de revêtement comportant au moins une unité de revêtement, la machine de revêtement (100) présentant de préférence au moins deux, en particulier exactement deux postes de travail disposés séparément les uns des autres, lesquels sont conçus comme des postes de revêtement.

8. Machine de traitement selon la revendication 7, **caractérisée en ce que** la machine de revêtement (100) est conçue pour un revêtement bilatéral d'un disque de frein, de préférence de telle sorte qu'une première opération de revêtement pour le revêtement d'un premier côté et une deuxième opération de revêtement pour le revêtement d'un deuxième côté, opposé axialement au premier côté, de la partie de freinage peuvent être effectuées successivement dans le temps et/ou **caractérisée en ce que** la machine de revêtement (100) présente plusieurs postes de travail (ST1 à ST4) disposés le long de la voie de transport du système de transport, qui présentent, dans cet ordre, un poste de chargement (110), un premier poste de revêtement (120-1) comportant au moins une unité de revêtement pour le revêtement d'un premier côté d'un disque de frein, un poste de retournement (130) pour le retournement d'un disque de frein logé sur une broche porte-pièce et au moins un deuxième poste de revêtement (120-2) pour le revêtement d'un deuxième côté du disque de frein ainsi qu'un poste de déchargement, le poste de chargement fonctionnant de préférence comme poste de déchargement également.

9. Machine de traitement selon la revendication 7 ou 8, **caractérisée en ce qu'**une unité de revêtement est réalisée comme un dispositif de rechargement laser qui, lors du fonctionnement, projette une poudre métallique en direction de la surface à revêtir et guide simultanément un faisceau laser qui est de préférence focalisé de telle sorte que la poudre métallique, avant d'atteindre la surface de la pièce, est fondue et est déposée dans l'état fondu sur la surface de la pièce, afin de former la couche fonctionnelle et/ou **en ce qu'**une unité de revêtement est déplaçable de manière commandée en entraînement verticalement ainsi qu'horizontalement et/ou une surface sur le côté de la pièce orienté vers le haut peut être revêtue dans chaque opération de revêtement.

10. Procédé pour l'utilisation d'un disque de frein (BS) revêtu, qui présente un corps de base qui présente une distribution de masse à symétrie de révolution par rapport à un axe de rotation (RA) du disque de frein et comprend une partie moyeu (NA) centrale ainsi qu'une partie de freinage (BA) de forme annulaire circulaire entourant la partie moyeu, la partie de freinage (BA) présentant deux surfaces axialement opposées qui supportent respectivement une couche fonctionnelle à symétrie de révolution par rapport à l'axe de rotation, dont la surface libre est réalisée comme surface de friction du disque de frein,
le procédé comprenant les étapes suivantes :
fourniture d'un système de transport comportant une unité de support de broche (150) mobile, qui supporte au moins une broche porte-pièce (170), laquelle est montée rotative autour d'un axe de rotation de broche (172) par rapport à l'unité de support de broche et présente un dispositif de retenue de pièce (173) qui est réalisé de telle sorte qu'un corps de base, logé sur le dispositif de retenue de pièce, d'un disque de frein est entraîné en rotation lors de la rotation de la broche porte-pièce sensiblement autour de l'axe de rotation (RA) du corps de base ;
fixation du corps de base au dispositif de retenue de pièce (170) ;
mouvement de l'unité de support de broche (150) du système de transport pour le transport du corps de base logé sur la broche porte-pièce dans une position de traitement d'un poste de traitement (120) ;
traitement de la partie de freinage (BA) sur au moins l'un des côtés, la pièce étant entraînée en rotation par rotation de la broche porte-pièce (170) à une vitesse de rotation de travail autour de l'axe de rotation de broche,
**caractérisé en ce que**
la broche porte-pièce (170), après la fixation de la pièce au dispositif de retenue de pièce (173), avant que la position de traitement ne soit atteinte, est mise en rotation à une vitesse de rotation croissante et la pièce logée sur la broche porte-pièce est déplacée dans la position de revêtement de manière déjà rotative à une vitesse de rotation d'entrée.

11. Procédé selon la revendication 10, **caractérisé en ce que** l'accélération du mouvement rotatif commence immédiatement après la fixation de la pièce au dispositif de retenue de pièce, avant que l'unité de support de broche ne soit mise en mouvement, afin de transporter la broche porte-pièce jusqu'au poste de traitement.

12. Procédé selon la revendication 10 ou 11, **caractérisé en ce que** la broche porte-pièce est accélérée jusqu'à une vitesse de rotation de travail, prévue pour une opération de traitement dans le poste de traitement, de plus de 100 tr/min, en particulier jusqu'à une vitesse de rotation de travail dans la plage de 150 tr/min à 600 tr/min, la vitesse de rotation d'entrée correspondant sensiblement à la vitesse de rotation de travail souhaitée pour l'opération de traitement, de sorte que l'opération de traitement puisse commencer sans retard dès que la pièce se trouve dans la position de traitement, ou la vitesse de rotation d'entrée étant inférieure à la vitesse de rotation de travail, de sorte qu'une autre phase d'accélération courte soit encore nécessaire.

13. Procédé selon l'une des revendications 10 à 12, **caractérisé en ce que** le traitement comprend la génération d'un revêtement fonctionnel à symétrie de révolution par rapport à l'axe de rotation sur au moins un côté de la partie de freinage dans une opération de revêtement, le corps de base étant entraîné en rotation par rotation de la broche porte-pièce à une vitesse de rotation de travail autour de l'axe de rotation de broche et une matière de revêtement étant appliquée par une unité de revêtement sur la surface à revêtir, la pièce présentant de préférence un premier côté et un deuxième côté de manière opposée dans une direction axiale et, dans une première opération de revêtement, une première couche fonctionnelle à symétrie de révolution étant appliquée sur une région de surface du premier côté et, dans une deuxième opération de revêtement, une deuxième couche fonctionnelle à symétrie de révolution étant appliquée sur une région de surface du deuxième côté, la première et la deuxième opération de revêtement étant effectuées de préférence successivement dans le temps et/ou la pièce étant fixée au dispositif de retenue de pièce dans une première orientation pour la première opération de revêtement, détachée du logement de pièce après la première opération de revêtement, retournée de la première orientation à une deuxième orientation dans une opération de retournement et fixée au dispositif de retenue de pièce dans la deuxième orientation.

14. Installation de production pour la fabrication de disques de frein (BS) revêtus, qui présentent un corps de base qui présente une distribution de masse à symétrie de révolution par rapport à un axe de rotation (RA) du disque de frein et comprend une partie moyeu (NA) centrale ainsi qu'une partie de freinage (BA) de forme annulaire circulaire entourant la partie moyeu, la partie de freinage présentant deux surfaces axialement opposées qui supportent respectivement une couche fonctionnelle à symétrie de révolution par rapport à l'axe de rotation, dont la surface libre est réalisée comme surface de friction du disque de frein,
**caractérisée en ce que**
l'installation de production présente au moins une machine de traitement (100A, 100B) selon l'une des revendications 1 à 9.

15. Installation de production selon la revendication 14, **caractérisée par** au moins l'une des caractéristiques suivantes :
(i) l'installation de production présente une ou plusieurs des machines de traitement qui sont configurées comme des machines de revêtement (100A, 100B) pour le revêtement bilatéral d'un disque de frein, une machine de revêtement présentant de préférence au moins une unité de rechargement laser qui est configurée pour projeter une poudre métallique en direction de la surface à revêtir et guider simultanément un faisceau laser qui est focalisé dans une zone de focalisation de telle sorte que la poudre métallique est fondue dans la zone de focalisation et déposée sur la surface de la pièce, afin de former la couche fonctionnelle ;
(ii) l'installation de production présente au moins une machine à rectifier (460) placée en aval de la dernière machine de revêtement, laquelle machine à rectifier est conçue de préférence comme machine de traitement selon l'une des revendications 1 à 9, une voie de refroidissement (470) étant disposée de préférence entre la machine de revêtement et la machine à rectifier pour le refroidissement de disques de frein revêtus.
